# EUROPEAN PATENT SPECIFICATION

(11) **EP 3 081 073 B1**
(45) Date of publication and mention of the grant of the patent: **04.07.2018**
(21) Application number: 16158472.7
(22) Date of filing: 03.03.2016
(51) Int. Cl.: A01F 15/07, B65B 11/04

(54) **WRAPPING APPARATUS AND WRAPPING METHOD WITH A LOCKING DEVICE FOR THE WRAPPING TABLE**
VERPACKUNGSVORRICHTUNG UND VERPACKUNGSVERFAHREN MIT EINRASTVORRICHTUNG FÜR DEN VERPACKUNGSTISCH
APPAREIL D'EMBALLAGE ET PROCÉDÉ D'EMBALLAGE AVEC UN DISPOSITIF DE VERROUILLAGE POUR LE PLATEAU D'EMBALLAGE

(30) Priority: 16.03.2015 NL 2014459
(43) Date of publication of application: 19.10.2016
(73) Proprietor: Forage Innovations B.V., 3147 PB Maassluis (NL)
(72) Inventor: REIJERSEN VAN BUUREN, Willem Jacobus, 3147PB MAASSLUIS (NL)
(74) Representative: AGCO Intellectual Property Department

(56) References cited:
- GB-A- 2 056 401
- GB-A- 2 228 246
- GB-A- 2 233 303
- US-A- 5 046 296
- US-A1- 2003 101 697

## Description

### FIELD OF THE INVENTION

The invention refers to an apparatus and to a method for wrapping an object into at least one web of wrapping material, in particular for wrapping into plastic sheet a round-cylindrical bale formed from agricultural crop material

### BACKGROUND OF THE INVENTION

The invention can be used in a wrapping apparatus for a round-cylindrical or cuboid bale which is made from loose agricultural material or from recycling material. The bale to be wrapped is carried by a wrapping table. The wrapping table is rotated around a vertical axis. The bale on the wrapping table is typically rotated around a horizontal axis, e.g. is rotated by several parallel conveying belts or by several parallel rollers. In the case of a round-cylindrical bale the object to be wrapped is rotated around its center axis. At least one web of plastic material, e.g. a plastic sheet, is placed around the bale such that the entire surface of the bale is wrapped.

Several such wrapping apparatuses have been disclosed.

In WO 2013/034268 A1 a bale wrapper 2 for a round-cylindrical bale 8 is described. The round bale 8 to be wrapped is positioned on a turntable (wrapping table) 4 and is rotated around a horizontal axis H which is equal to the center axis of the bale 8. In addition the turntable 4 with the bale 8 is rotated around a vertical axis V being perpendicular to the horizontal axis H. For rotating the bale 8 around the horizontal axis H, two rollers 20, 20' rotate several belts 24. The circumferential surface of the bale 8 rests on the belts 24. A web 34 of a wrapping material is pulled from a reel 30 which is kept by a stationary holder 32 on an arm 28.

A similar wrapper is disclosed in EP 1310155 B1.

After the object (round bale, e.g.) is readily wrapped, the movement of a rotating part of the wrapper is stopped. Several proposals were made how to achieve this goal.

GB 2233303 A discloses a bale wrapper apparatus 10 with a tiltable platform 11 and a rotatable turntable 12. The turntable 12 rotates a bale to be wrapped by means of two rollers 14 and endless slack belts 15 guided around the rollers 14. The round-cylindrical bale is rotated around its center axis. While the bale is rotated and wrapped, the platform 11 and the turntable 12 are in a horizontal position. A drive motor 18 rotates a drive pinion 17. The drive pinion 17 engages a disc-shaped ring gear 16 and rotates it. The ring gear 16 is connected with the turntable 12. By rotating the ring gear 16, the turntable 12 being in the horizontal position is rotated around a vertical axis 13. For discharging the wrapped bale, the platform 11 and thereby also the turntable 12 with the bale is pivoted upwards around a pivotal mounting 29 on the platform 11. When the platform 11 is pivoted, a locking element 19 is moved from a disengaged position into a locking position. The locking element 19 in the locking position engages the ring gear 16 and locks the turntable 12 against any idle rotation of the turntable 12 relative to the platform 11. An operating device 20 can move the locking element 12 between the two positions.

GB 2056401 A discloses a bale wrapper which wraps a round-cylindrical body 10 into a film 12 taken from a roll 11, cf. Fig. 1. A pair of parallel rollers 13 mounted at a turntable 15 rotates the body 10 to be wrapped. The body 10 is steadied on the rollers 13 by an upper pair of rollers 17. The turntable 15 rests on a pillar 21 and can rotate around a vertical axis 20. A shaft 90 of the turntable pillar 12 rests in a machine frame 93 and is rotated by a motor (not shown), cf. Fig. 7. An electromagnetic brake can decelerate the shaft 90, cf. Fig. 9. A ring 120 is mounted on the shaft 90. A brake disc 122 belonging to the brake cooperates with the ring 120. A push rod 124 with an asymmetric cap 135 can be lifted and can lift the wrapped body 10 from the turntable 15 comprising the turntable plates 15a, cf. Fig. 10.

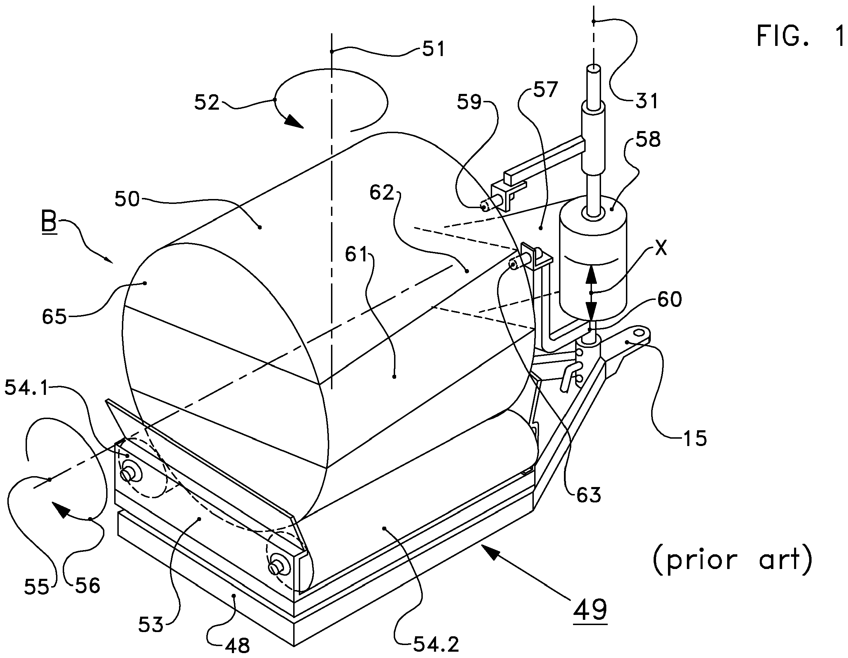

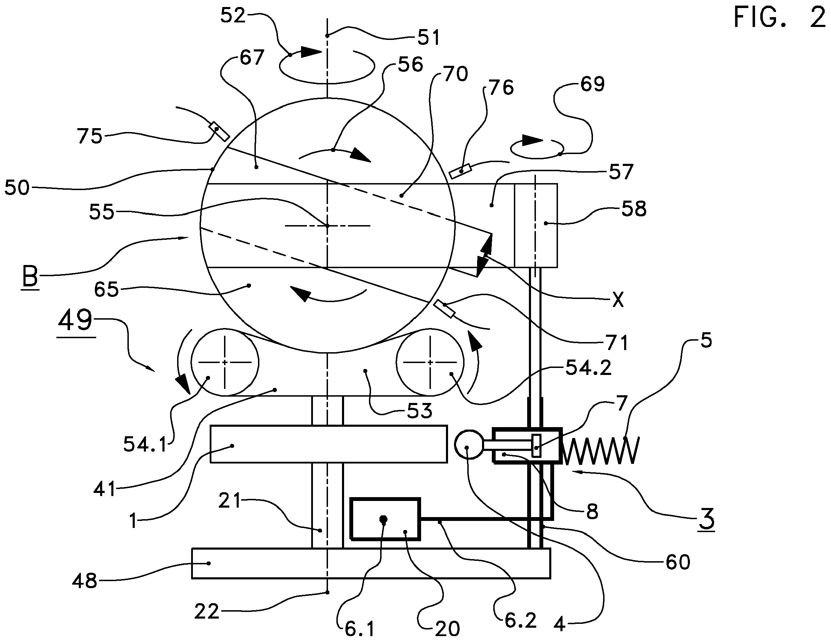

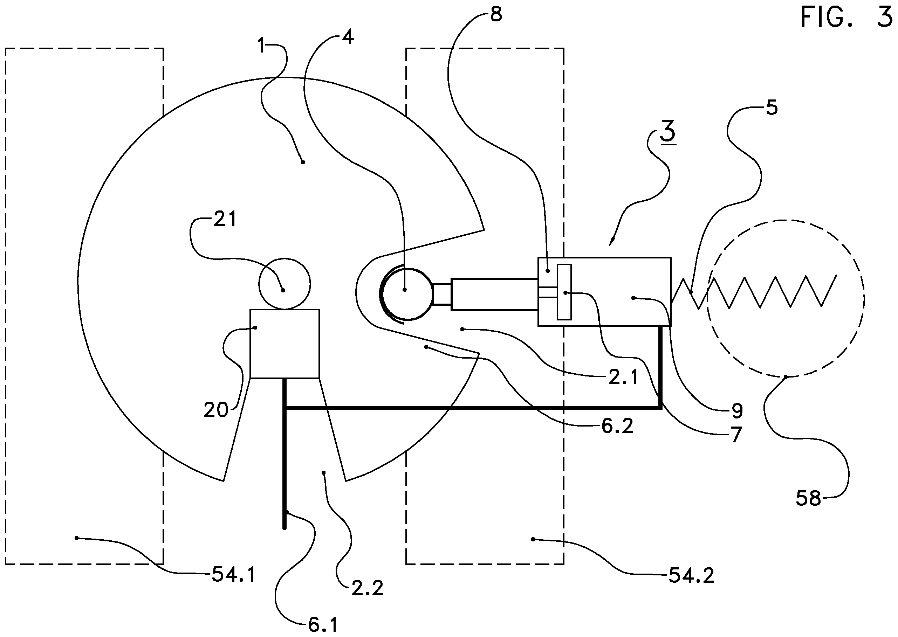

In US 5,046,296 a bulk material packaging apparatus is disclosed. A cylindrical object (load L) is to be wrapped and rests on a frame structure 15 comprising two end rails 16 and two rollers 18, 19, cf. Fig. 1. The two front faces of the object L are arranged between two disk-shaped elements 23, cf. Fig. 3. The rollers 18, 19 rotate the object L. Wrapping material 47 is pulled from a reel 58 and is placed around the object L. The frame structure 15 rests on a platform 8. The platform 8 carries the frame structure 15. The platform 18 can be tilted with respect to the frame 2 around a horizontal axis parallel to the axes of the rollers 18, 19. The frame structure 15 belongs to a turn table unit 9. A ram 14 tilts the platform 8 after the object L is completely wrapped. The drive to the turn table 9 is stopped via a pivoted brake lever member 60 which carries a brake pad 61, cf. Fig. 1 and Fig. 2. The lever 60 is pivoted by the ram 14 when the platform 8 is tilted. The brake pad 61 is pressed against the turn table unit 9 and stops its rotation.

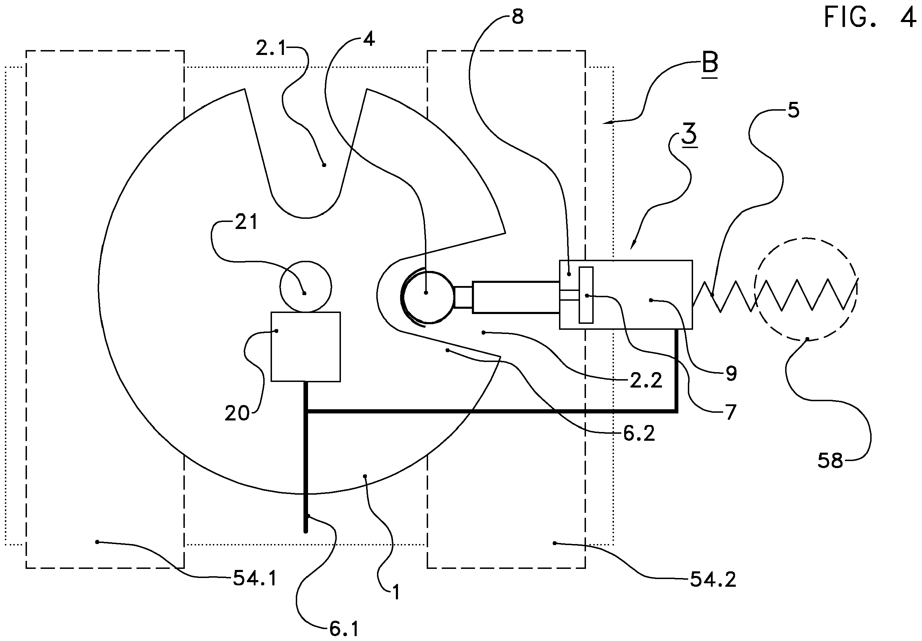

GB 2228246 A discloses a bale wrapping machine. A bale rests on a turn table, cf. the plan view of Fig. 3. A main bearing 17 carries the central spindle 18 around which the turn table 1 rotates. A spindle (shaft) 3 rotates the turn table 1. A brake assembly 30 prevents an undesired counter-rotation of the shaft 3 which can be carried by a rotated bale which has a shape not perfectly cylindrical. A main disk 32 is rigidly attached to the shaft 3, cf. Fig. 4. A cam 34 is moved by means of a lever 37. Via a disk 38 the lever 37 is connected to the arm 39 of a cam-follower device. This brake assembly 30 prevents the undesired counter-rotation while the bale is rotated and wrapped.

The bale wrapping device of US 2003/0101697 A1 carries a bale 11 on a platform 1 with driven rollers 2 such that the bale 11 is rotated around its center axis 9 in the rotation direction 10. A wrapping arm 4 is rotated around a vertical axis 8 and guides a film roll 7 around the rotated bale 11.

### SUMMARY OF THE INVENTION

A problem solved by the invention is to provide a wrapping apparatus with the features of the preamble of claim 1 and a wrapping method with the features of the preamble of claim 18 wherein the flexibility of the wrapping apparatus is increased without reducing the reliability.

This problem is solved by a wrapping apparatus with the features of claim 1 and by a wrapping method with the features of claim 18. Preferred embodiments are specified in the depending claims.

The wrapping apparatus according to the invention comprises
- a frame,
- a wrapping table,
- a wrapping part rotating motor,
- at least one reservoir holder for holding a reservoir of wrapping material, and
- a locking device.

The wrapping table can carry an object to be wrapped. The wrapping table can be rotated with respect to the frame around a wrapping part rotating axis. The wrapping table or the or every reservoir holder is therefore implemented as a rotatable wrapping apparatus part which is rotatable with respect to the frame around the wrapping part rotating axis.

The wrapping part rotating motor can rotate the rotatable wrapping apparatus part with respect to the frame around the wrapping part rotating axis. Thereby the rotatable wrapping apparatus part can be rotated while the wrapping table carries an object to be wrapped. The object on the wrapping table is also rotated around the wrapping part rotating axis with respect to the or every reservoir holder and therefore with respect to the or at least one reservoir. Thanks to this relative movement the object on the wrapping table is wrapped into at least one web of wrapping material taken from the or at least one reservoir held by the or one reservoir holder of the wrapping apparatus.

The locking device can selectively be operated
- in a releasing mode,
- in an unloading locking mode, or
- in at least one further locking mode.

In the releasing mode the locking device enables a rotation of the rotatable wrapping apparatus part around the wrapping part rotating axis with respect to the frame.

In every locking mode the locking device inhibits a rotation of the rotatable wrapping apparatus part with respect to the frame around the wrapping part rotating axis, thereby locking the rotatable wrapping apparatus part in a rotational position with respect to the frame. Thanks to the different locking modes the wrapping apparatus can selectively lock the rotatable wrapping apparatus part in the unloading rotational position or in the or one further rotational position.

When the locking device is in the unloading locking mode, it locks the rotatable wrapping apparatus part in an unloading rotational position with respect to the frame. The locking device being in the or one further locking mode locks the rotatable wrapping apparatus part in a further rotational position with respect to the frame. The or every further rotational position differs from the unloading rotational position.

The wrapping part rotating motor rotates the rotatable wrapping apparatus part around the wrapping part rotating axis while the wrapping table carries the object to be wrapped and wherein the locking device is in the releasing mode. The object is moved with respect to the or one reservoir and is wrapped. If the object wrapping is finished, the locking device is transferred into the unloading locking mode and locks the rotatable wrapping apparatus part in the unloading rotational position. The wrapped object is unloaded from the locked wrapping table.

In addition the rotatable wrapping apparatus part is temporarily locked in the or one further rotational position. This locking is done by transferring the locking device into the or one further locking mode being different from the unloading locking mode.

### ADVANTAGES

According to the invention the wrapping table carries the object to be wrapped. The rotatable wrapping apparatus part can rotate around the wrapping part rotating axis. Therefore the object on the wrapping table or at least one reservoir can also be rotated around the wrapping part rotating axis with respect to the frame. Thereby the carried object is moved with respect to the or at least one reservoir. According to the invention the locking device in the releasing mode enables a rotation of the rotatable wrapping apparatus part with respect to the frame around the wrapping part rotating axis. If this movement is enabled, the wrapping part rotating motor can rotate the rotatable wrapping apparatus part.

According to the invention the locking device can lock the rotatable wrapping apparatus part and thereby inhibit a rotation of the rotatable wrapping apparatus part. The rotatable wrapping apparatus part is locked when the locking device has been transferred into one locking mode. When the rotatable wrapping apparatus part is locked and cannot move, a feedback of the rotatable wrapping apparatus part onto the wrapping part rotating motor is inhibited.

Without a locking device such a feedback can in particular occur when the wrapping procedure is finished and the wrapping part rotating motor does no longer rotate the rotatable wrapping apparatus part. If the wrapping table is the or one rotatable wrapping apparatus part, the wrapped object on the wrapping table, however, tends to continue its rotation around the wrapping part rotating axis due to its inertia. An agricultural bale serving as an object to be wrapped on the wrapping table can have a weight of several hundred kg and therefore a high inertia when being rotated. Often a high friction force between the wrapped object and the wrapping table occurs. Therefore the inertia of the object on the wrapping table tends to rotate the wrapping table around the wrapping part rotating axis. The feedback would imply a high torque onto the wrapping part rotating motor which could cause a malfunction of the motor. If the or one reservoir holder is the or one rotatable wrapping apparatus part, the reservoir holder carrying a reservoir also tends to continue its rotation. A reservoir can have a weight of some dozen kg. Therefore this feedback is in both cases not desired and is inhibited by the invention.

A locking device undergoes less mechanical wear than a brake which directly touches the rotating wrapping table or reservoir holder or touches the circumferential surface of a further rotating wrapping apparatus part. Compared with a brake it requires less mechanical force to transfer the locking device from one mode into the other mode.

According to the invention the rotatable wrapping apparatus part can be locked in at least two different rotational positions with respect to the frame. This feature increases the flexibility of the wrapping apparatus during operation without reducing the reliability when unloading the wrapped object. It is possible to lock the rotatable wrapping apparatus part in a loading rotational position when the object to be wrapped is placed on the wrapping table. This loading rotational position differs from the unloading rotational position which makes it easier to place the object to be wrapped on the wrapping table. Therefore the undesired feed back onto the motor is also inhibited when the object is placed. For placing the object onto the wrapping table the object needs to be moved, e.g. shifted, with respect to the wrapping table and has inertia. Without locking the rotatable wrapping apparatus part this inertia could provide an undesired feedback onto the wrapping part rotating motor.

According to the invention the locking device locks the rotatable wrapping apparatus part in the unloading rotational position and in at least one further rotational position, i.e. in at least two defined rotational positions with respect to the wrapping part rotating axis. Therefore the wrapping table carrying the wrapped object or the or one moveable reservoir holder can be set into at least two defined positions with respect to the wrapping part rotating axis when being locked. Thanks to the locking device the rotatable wrapping apparatus part can be locked when loading an object to be wrapped on the wrapping table, can be unlocked for rotating the rotatable wrapping apparatus part and for wrapping the wrapped object on the wrapping table, and can be locked again for unloading the wrapped object from the wrapping table.

According to the invention the locking device locks the rotatable wrapping apparatus part in two defined rotational positions with respect to the frame and the wrapping part rotating axis. Therefore the wrapping table carrying the wrapped object or the reservoir holder can be set into two different defined positions with respect to the wrapping part rotating axis when being locked. The different defined positions make it easier to load the object to be wrapped onto the wrapping table and to unload the wrapped object from the wrapping table, in particular if the wrapped object is unloaded by tilting the wrapping table.

### PREFERED EMBODIMENTS

In one embodiment the wrapping part rotating motor rotates the wrapping table. Thanks to this embodiment the object can be wrapped by a movement of the object relative to the or at least one reservoir without the need of moving the or one reservoir with respect to a frame of the wrapping apparatus. In particular it is possible but not necessary to rotate the or at least one reservoir around the object on the wrapping table. Compared with a moveable reservoir a stationary reservoir holder saves a drive for the reservoir and requires less space.

It is also possible that the or one reservoir holder and therefore also at least one reservoir are moved around the wrapping table while the object is on the wrapping table. The wrapping part rotating motor rotates the or every reservoir holder serving as a rotatable wrapping apparatus part. This embodiment saves the need to rotate the wrapping table.

These embodiments can be combined. Thanks to this combination two relative movements between the object on the wrapping table and the or every moved reservoir occurs, namely a first relative movement caused by the rotation of the wrapping table and a second relative movement caused by the movement of the reservoir around the wrapping table. The invention enables both embodiments (stationary or moved reservoir).

According to the invention the rotatable wrapping apparatus part can selectively be locked with respect to the frame in two different rotational positions. It is possible that an angle of 90 degrees or of 180 degrees between these two rotational positions occurs. Further angles are also possible.

In one embodiment the rotatable wrapping apparatus part is subsequently locked in two different rotational positions for the purpose of wrapping one object. The rotatable wrapping apparatus part, i.e. the wrapping table or at least one reservoir holder, is locked in the or one further rotational position while the object is placed on the wrapping table. As soon as the rotatable wrapping apparatus part is locked, an undesired impact of the rotatable wrapping apparatus part onto the wrapping part rotating motor is also inhibited while the object is placed on the wrapping table. Later the locking device is transferred into the releasing mode and the wrapping part rotating motor rotates the released rotatable wrapping apparatus part. After the object on the wrapping table is wrapped, the rotatable wrapping apparatus part is locked again, this time in the unloading rotational position. Thanks to the different rotational positions in which the rotatable wrapping apparatus part can be locked the object to be wrapped can be moved from one direction onto the wrapping table, e.g. in a direction parallel to the travelling direction if the wrapping apparatus belongs to a vehicle. The wrapped object can be removed from the wrapping table in a different direction, e.g. perpendicular to the travelling direction.

In one embodiment the wrapping apparatus belongs to a vehicle which can be moved over ground in a travelling direction. An object to be wrapped is moved in a loading direction onto the wrapping table wherein the loading direction is substantially perpendicular to the travelling direction. The further rotational position in which the rotatable wrapping apparatus part is locked while the object is moved on the wrapping table is preferably selected such that the risk of the undesired event is reduced that the object moves in the loading direction from the wrapping table. Or one reservoir holder is rotated when loading the object to be wrapped. The wrapped object is moved from the wrapping table in an unloading direction which is parallel or antiparallel to the travelling direction. The unloading rotational position is selected correspondingly such that the risk of the undesired event is reduces that the wrapped object does not moved at all or not moved properly from the wrapping table. Or one reservoir holder is rotated when unloading the wrapped object.

In an alternative embodiment the wrapping apparatus wraps the object and subsequently a further object carried on the same wrapping table. For removing the wrapped (first) object from the wrapping table the rotatable wrapping apparatus part, i.e. the wrapping table or at least one reservoir holder, is locked in the unloading rotational position. For removing the wrapped further (second) object from the wrapping table the rotatable wrapping apparatus part is locked in the or one further rotational position. This embodiment enables to selectively remove an object into one of at least two different directions and therefore adapt the removing directions to operating constraints.

In one implementation of this embodiment a decision is made in which direction a wrapped object is to be removed from the wrapping table. Depending on this decision the rotatable wrapping apparatus part is locked in the unloading rotating position or in the further rotating position. This decision can be made by a human operator. It is also possible that the decision is automatically made, e.g. depending on the measured inclination of the wrapping apparatus and/or on a measured dimension, weight or further parameter of the wrapped object.

These embodiments can be combined. It is possible that the locking device can lock the rotatable wrapping apparatus part in at least three different rotational positions with respect to the frame, namely at least one loading rotational position and at least two different unloading rotational positions.

According to a preferred embodiment the wrapping apparatus further comprises a transmission member. The wrapping part rotating motor can rotate or otherwise drive the transmission member. The transmission member can establish a drive connection between the wrapping part rotating motor and the rotatable wrapping apparatus part. Thereby the motor can rotate the rotatable wrapping apparatus part while the wrapping table carries an object to be wrapped. Thanks to the transmission member the wrapping part rotating motor can be positioned in a distance to the rotatable wrapping apparatus part and needs not to contact the rotatable wrapping apparatus part. In the releasing mode the locking device enables a movement of the transmission member. In every locking mode the locking device inhibits a movement of the transmission member and locks the transmission member in a corresponding locking position, thereby locking the rotatable wrapping apparatus part in a rotational position with respect to the wrapping part rotating axis.

In one embodiment the locking device can be moved into at least one locking mode. The rotatable wrapping apparatus part can be locked by the locking device being in the or one locking mode in at least one rotational position with respect to the frame. The locking device being in the or one locking mode locks the transmission member. Thereby the transmission member is locked in one locking position with respect to the frame. As the transmission member is in drive connection with the rotatable wrapping apparatus part, the locked transmission member locks the rotatable wrapping apparatus part and inhibits a rotation of the rotatable wrapping apparatus part.

Preferably the locking device can lock the transmission member in at least two different locking position with respect to the frame, namely in an unloading locking position corresponding to the unloading locking mode of the locking device and in at least one further locking position corresponding to the further locking mode. As the transmission member is in drive connection with the rotatable wrapping apparatus part, the locked transmission member can lock the rotatable wrapping apparatus part in at least two different rotational positions with respect to the frame. These different rotational positions of the locked rotatable wrapping apparatus part are caused by and correspond to the different locking positions of the transmission member.

According to the embodiment with the transmission member the locking device locks the transmission member and not directly the rotatable wrapping apparatus part. The locking device in the locking mode is spaced apart from the rotatable wrapping apparatus part and locks a rotatable or otherwise movable transmission member. When the locking device is in the releasing mode, the released transmission member establishes a drive connection between the wrapping part rotating motor and the rotatable wrapping apparatus part. The motor drives the transmission member and the driven transmission member rotates the rotatable wrapping apparatus part. The locking device in the locking mode inhibits a movement, in particular a rotation, of the transmission member. As this drive connection is interrupted by the locking device being in the locking mode, the undesired feedback of the rotatable wrapping apparatus part onto the wrapping part rotating motor is inhibited.

The locking device can lock the transmission member in at least two different positions with respect to the frame. The different positions correspond to the different locking modes of the wrapping device. Locking the transmission member in one position causes the rotatable wrapping apparatus part to be locked in one defined rotational position which respect to the frame.

In one implementation a part of the transmission member is rotated. This rotation causes the rotatable wrapping apparatus part to rotate. The locking device can lock this transmission device part in at least two different rotational positions with respect to the frame. These two rotational positions provide two different locking modes of the locking device. Thereby the rotatable wrapping apparatus part can be locked in two different rotational positions with respect to the frame.

It is also possible that a part of the transmission member oscillates, e.g. alternatively perform linear movements in two different directions. The transmission member can comprise an oscillating piston. The locking device can lock the oscillating transmission member part in two different positions with respect to the frame.

In one embodiment the wrapping apparatus comprises a lockable member which is in drive connection with the rotatable wrapping apparatus part. This lockable member can belong to the transmission member between the wrapping part rotating motor and the rotatable wrapping apparatus part or can be in a drive connection with this transmission member. It is also possible that the lockable member is mounted at the rotatable wrapping apparatus part.

In one embodiment the locking device comprises
- a locking body and
- a locking body actuator.

The lockable member can move with respect to the locking body. The locking body actuator can selectively move the locking body into a locking position or into a releasing position with respect to the lockable member. The locking body in the locking position inhibits a movement of the lockable member with respect to the locking body and thereby a rotation of the rotatable wrapping apparatus part. In the embodiment with the rotatable transmission member part the locking body being in the locking position inhibits a rotation of this transmission member part. The locking body in the releasing position enables a movement of the lockable member and thereby a rotation of the rotatable wrapping apparatus part.

It requires only little mechanical power to move the locking body from one position into a further position. Preferably the locking body can be moved in two opposing horizontal directions such that only friction but not the force of gravity needs to be surpassed for moving the locking body from one position into the other position.

According to this embodiment the locking body being in the locking position can selectively lock the lockable member in at least two different positions with respect to the frame and can release the lockable member. It suffices, however, that the locking body can be moved with respect to the lockable member between two positions, namely the releasing position and the locking position. Thereby two positions of the locking body can provide at least three different modes of the locking device. One locking position can provide at least two different locking modes and therefore different rotational positions in which the rotatable wrapping apparatus part is locked.

Thanks to the lockable member it is not necessary that the locking body directly contacts the rotatable wrapping apparatus part or the transmission member. A larger lever arm can be achieved. This embodiment further provides more options where to position the locking device with respect to the rotatable wrapping apparatus part.

In one implementation the lockable member is rigidly connected with the transmission member between the wrapping part rotating motor and the rotatable wrapping apparatus part. The lockable member being in the locking position locks the transmission member and prevents the rotation or other movement of the transmission member and thereby of the rotatable wrapping apparatus part.

In one implementation the lockable member comprises at least one aperture. The locking body in the locking position engages into the aperture and inhibits a rotation or a further movement of the lockable member. The lockable member is locked in a defined rotating position. The locking body in the releasing position is outside of a trajectory enveloping the possible movement of the lockable member and enables a rotation of the lockable member.

In one preferred implementation two apertures are cut into the lockable member. The lockable member can rotate with respect to the frame. This feature enables to selectively lock the lockable member in a first and in a second rotating position, one position per aperture. In one implementation an angle of 90 degrees between the two apertures occurs. In a further implementation the angle is 180 degrees.

In one implementation the lockable member can rotate with respect to the locking body around a lockable member rotating axis. The locking body being in the locking position inhibits a rotation of the lockable member. Preferable the lockable member rotating axis is identical with the wrapping part rotating axis or is parallel to the wrapping part rotating axis.

In one implementation of the lockable member the or at least one aperture tapers when seen in a viewing direction in that direction in which the locking body is moved into the locking position. In the case of a rotatable locking member this viewing direction is perpendicular to the rotating axis of the lockable member. One advantage of this implementation; It can happen that the aperture of the rotatable member is not positioned in exact adjustment with the locking body when the wrapping part rotating motor terminates the rotation of the rotatable wrapping apparatus part. When the locking body is transferred into the locking position and engages deeper into the aperture, the locking body can slightly move the lockable member and thereby rotate the rotatable wrapping apparatus part in the correct rotational position before locking it. Thereby the tapering shape of the or every aperture provides an auto-correction function for the rotating position of the rotatable wrapping apparatus part.

According to the embodiment with the lockable member a locking body actuator can move the locking body between the locking position and the releasing position. In one implementation the locking body actuator comprises a biasing element, e.g. at least one spring, and a further actuator, e.g. at least one piston-cylinder device or an electric motor. The biasing element tends to move and to keep the locking body in the locking position. The further actuator can be switched on and off. The activated further actuator moves the locking body against the force of the biasing element into the releasing position. Preferably the further actuator is activated when the wrapping part rotating motor is triggered and is deactivated when the object is readily wrapped.

The wrapping part rotating motor can comprise a hydraulic or electric motor. In one embodiment this wrapping part rotating motor is positioned below the wrapping table and drives the transmission member. This embodiment is in particular preferred if the wrapping table is the or one rotatable wrapping apparatus part, i.e. the wrapping part rotating motor can rotate the wrapping table. As the wrapping part rotating motor is positioned below the wrapping table, the motor is better protected against environmental impacts. In one implementation the transmission member comprises a shaft. The rotating axis of the shaft can coincide with the wrapping part rotating axis. It is also possible that at least one drive chain rotates a shaft of the transmission member.

In one embodiment the or every reservoir is rotatably mounted at a stationary holder. The reservoir can rotate around its own rotational axis. "Stationary" means: The reservoir holder cannot be moved with respect to the frame and can therefore not be moved around the object around the wrapping table. The relative movement between the object on the wrapping table and the wrapping material is only caused by rotating the wrapping table and optionally by moving the object with respect to the wrapping table. The web of wrapping material is pulled from the reservoir by the movement of the object on the rotated wrapping table with respect to the stationary reservoir. This embodiment saves a drive for the reservoir holder and the space which would otherwise be required for enabling the holder rotation.

In a further embodiment the or at least one reservoir is guided and moved around the wrapping table and serves as the or one rotatable wrapping apparatus part. The reservoir holder can be mounted on a wrapping ring or on the free end of a wrapping arm, e.g. This embodiment reduces the time required for entirely wrapping the object on the wrapping table.

In one embodiment the or at least one reservoir can be shifted in a direction parallel to the wrapping part rotating axis and/or vertically with respect to the wrapping table and thereby with respect to the object on the wrapping table. This embodiment enables adapting the vertical position of the reservoir to the height of the object on the wrapping table. In particular it is possible to position the reservoir besides a center area of the object on the wrapping table.

In a preferred embodiment the wrapping table rotates the object on the wrapping table with respect to the frame around an object rotating axis. This object rotating axis is perpendicular or angular to the wrapping part rotating axis. This embodiment enables to wrap the entire object surface.

In one embodiment the wrapping apparatus comprises at least two holders for two reservoirs of wrapping material. Two wraps of wrapping material are pulled simultaneously from the two reservoirs and are placed simultaneously around the object's surface. This embodiment saves wrapping time. If one reservoir is empty, one web is torn, or one reservoir holder blocks, the wrapping procedure can continued by using the other reservoir.

In one embodiment the wrapping apparatus belongs to a vehicle which can be moved over ground in a travelling direction. A chassis carrying at least one ground-engaging wheel is mounted at the frame. Preferably the wrapping part rotating axis is perpendicular to the ground and perpendicular to the travelling direction.
The wrapping apparatus can also be implemented as a stationary device.

These and other aspects of the invention and of the preferred embodiment will be even more apparent from the detailed embodiment as described below and will be elucidated in detail there.

### BRIEF DESCRIPTION OF THE DRAWINGS

Fig. 1 shows a wrapping apparatus according to the prior art with a stationary film holder;
Fig. 2 shows a further wrapping apparatus according to the prior art with two moved film holders;
Fig. 3 shows a wrapping apparatus according to the invention in a horizontal viewing direction parallel to the bale's center axis;
Fig. 4 shows in a vertical viewing direction the wrapping apparatus of Fig. 3 being locked in the further rotational position when loading a bale to be wrapped onto the wrapping table;
Fig. 5 shows in the vertical viewing direction of Fig. 4 the wrapping apparatus of Fig. 3 while the locking device is in the releasing mode;
Fig. 6 shows in the vertical viewing direction of Fig. 4 the wrapping apparatus of Fig. 3 being locked in unloading rotational position when unloading the wrapped bale from the wrapping table.

### DETAILED DESCRIPTION OF EMBODIMENT

In the embodiment the invention is used for wrapping a round-cylindrical bale formed from loose agricultural material (hay, straw, silage, e.g.).

In one embodiment the wrapping apparatus is a part of a so-called baler-wrapper combination which comprises the wrapping apparatus and further comprises a bale forming apparatus (baler). The baler forms under pressure the bale in a bale forming chamber. The bale is ejected out of the bale forming chamber and is transferred to the wrapping apparatus. In a further embodiment (Fig. 1 and Fig. 2) the wrapping apparatus is a stand-alone wrapper which wraps bales which are previously formed and deposited on a field.

Fig. 1 and Fig. 2 shows a wrapping apparatus according to the prior art. Fig. 3 to Fig. 6 show a wrapping apparatus according to one embodiment of the invention. In all figures coinciding parts have the same reference signs.

In the embodiment a round-cylindrical bale B is to be wrapped into a web 57 of plastic sheet. The bale B has previously been formed under pressure from agricultural crop material. The round-cylindrical bale B has two parallel circular front faces 65 and a cylindrical surface 50 extending between these two front faces 65. The plastic sheet 57 is made of an impermeable material. This bale B serves as the object which is to be wrapped.

The wrapping apparatus of Fig. 1 and Fig. 2 as well as that of Fig. 3 to Fig. 6 have the following parts:
- a wrapping table 49 which can carry the bale B to be wrapped,
- at least one supply reel 58, 58.1, 58.2 with plastic sheet serving as a reservoir,
- at least one holder 60, 60.1, 60.2 serving as a reservoir holder which holds the supply roll 58, 58.1, 58.2 such that the supply roll 58, 58.1, 58.2 can rotate around a vertical axis 31,
- a supporting base plate or frame 48,
- a towing unit 15 which is mechanically connected with the base plate 48 and can be coupled with a hitch of a pulling vehicle (not shown), and
- a chassis with two wheels (not shown)

The rotated bale B pulls a web 57 of plastic sheet from the supply roll 58 (to be described below).

The wrapping table 49 comprises
- two bale supporting rollers 54.1, 54.2 which are rotated around two parallel horizontal rotating axes by a drive (not shown),
- several parallel conveying belts 41 (not shown in Fig. 1 but in Fig. 2) guided around the rollers 54.1, 54.2,
- a chain 48 which rotates the roller 54.1 around an axis which is perpendicular to the drawing plane of Fig. 2, and
- a wrapping table frame 53 which rotatably holds the axles of the rollers 54.1, 54.2 from two sides.

In the embodiment of Fig. 1 the reservoir holder 60 is mounted on the supporting base plate 48 and cannot be moved with respect to the base plate 48.

The invention can also be used in a wrapping apparatus in which the or every supply reel 58, 58.1, 58.2 is positioned angularly above the base plate 48 and therefore above the bale B to be wrapped. Fig. 2 shows a further wrapping apparatus in which the invention can be used. Fig. 2 shows a wrapper as known from the prior art. This wrapper is moved over ground by means of two ground-engaging wheels 23.1, 23.2. The wrapper frame 48 carries the wrapping table 49 with the rollers 54.1, 54.2. In the embodiment of Fig. 2 two reservoir holders 60.1, 60.2 hold two supply reels 58.1, 58.2.

In the embodiment of Fig. 1 a motor rotates the wrapping table 49 around the axis Y. In the embodiment of Fig. 2 a motor 51 rotates the reservoir holder 60.1, 60.2 around the axis Y. According to this embodiment a hydraulic or mechanical motor 51 rotates both holders 60.1, 60.2 around the vertical axis Y and thereby around a bale (not shown in Fig. 2) on the wrapping table 49. Simultaneously the belts 41 of the wrapping table 49 are driven and rotate the bale B around its center axis.

In a further implementation of the embodiment of Fig. 2 the reservoir holders 60.1, 60.2 cannot be moved with respect to the frame 48 at all. In yet a further implementation the reservoir holders 60.1, 60.2 are not moved while the bale B is wrapped and the wrapping table 49 is rotated. For loading the bale B onto the wrapping table 49 and for removing the wrapped bale B from the wrapping table 49 the reservoir holders 60.1, 60.2 are rotated into a position in which the reservoir holders 60.1, 60.2 do not form an obstacle.

In yet a further implementation it is possible to move the reservoir holders 60.1, 60.2 in a vertical direction up and down. Therefore the vertical distance between the reservoir holders 60.1, 60.2 and the wrapping table can be changed. Thereby it is possible to adapt the position of the reservoir holders 60.1, 60.2 and therefore of the supply reels 58.1, 58.2 to the diameter of the bale B to be wrapped.

The wrapping apparatus of Fig. 2 can lift a bale which has previously been deposited on the ground G and which is to be wrapped on the wrapping table 49. A loading structure 42 can lift a bale from the ground G and can place the bale on the wrapping table 49. This loading structure 42 comprises a pair of loading arms 44, a pair of grip arms 46, and a hydraulic actuator 43 which can move the loading structure 42. The loading structure 42 further comprises a loading frame 45 on which a bale can be stored before the bale is moved into the wrapping table 49.

In both implementations (Fig. 1 and Fig. 2) a drive (not shown) or a human operator can adjust the supply roll 58, 58.1, 58.2 with respect to the bale B on the wrapping table 49 by moving the supply roll 58, 58.1, 58.2 in a vertical direction (double arrow D) upwards or downwards with respect to the wrapping table 49. This adjustment can be performed in order to adjust the vertical position of the supply roll 58 to the diameter of the bale B. Preferably the adjustment is performed before starting the wrapping such that the supply roll 58 is positioned besides the center axis C of the bale B.

The circumferential surface 50 of the round-cylindrical bale B rests on the conveying belts 41 which are guided around the rollers 54.1, 54.2 - or directly on the rollers 54.1 and 54.2. The driven roller 54.1 moves the conveying belts 41. The weight of the bale B tensions the belts 41. Thereby the bale B is rotated around the horizontal axis C in a rotating direction 56. This horizontal axis C is the center axis of the round-cylindrical bale B - provided the bale B is properly placed on the wrapping table 49 and its shape does not significantly deviate from an ideal cylinder.

In the embodiment of Fig. 1 and Fig. 3 to Fig. 6 the wrapping table 49 can be rotated with respect to the frame 48 around a wrapping part rotating axis Y. In this embodiment a hydraulic motor 20 (shown in Fig. 3 to Fig. 6) rotates the wrapping table 49 and the bale B with respect to the supporting base plate 48 around this vertical rotating axis Y (the wrapping part rotating axis) in the rotating direction R. Thereby the bale B is moved with respect to the supporting plate 48 and thereby moved with respect to the supply roll 58 in two directions around two perpendicular rotating axes, namely
- in the direction 56 around the horizontal axis C and
- in the direction R around the vertical axis Y.
By these two overlapping movements the web 57 of plastic sheet is pulled from the stationary supply roll 58 and is placed on the front faces 65 and on the circumferential surface 50 of the bale B. Fig. 1 shows a wrapped portion 61 and an unwrapped area 62 on the circumferential surface 50.

In the embodiment of Fig. 1 two optional sensors 59, 63 monitor whether or not plastic sheet is placed on the adjacent front face 65 of the bale B, cf. Fig. 1. Three further optional sensors 71, 75, 76 monitor whether or not plastic sheet is placed on the circumferential surface 50 of the bale B, cf. Fig. 1.

The wrapping apparatus of Fig. 1 and Fig. 2 as well as the wrapping apparatus of Fig. 3 to Fig. 6 has the following further parts which are only shown in Fig. 3 to Fig. 6:
- a vertical shaft 21 which is connected with the frame 53 of the wrapping table 49,
- a hydraulic motor 20 for rotating the wrapping table 49 around the vertical axis Y, and
- a hydraulic supply line 6.1 for the hydraulic motor 20.

The hydraulic motor 20 is mounted on the base plate 48 and is supplied with hydraulic fluid via the supply line 6.1. The motor 20 rotates the shaft 21 around the vertical rotating axis 22. The motor 20 can be connected with the shaft 20 by means of sprocket wheels and optionally of at least one drive chain. The driven shaft 21 serves as the transmission member between the motor 20 and the wrapping table 49. When being rotated, the shaft 21 rotates the wrapping table 49 around the vertical rotating axis 22. In place of a hydraulic motor an electric motor can also be used.

The rotation of the wrapping table 49 causes the bale B to rotate around the vertical axis Y. In the embodiment the shaft rotating axis X is equal to the wrapping part rotating axis Y. If the bale B is properly placed on the wrapping table 49, the wrapping part rotating axis Y intersects perpendicularly with the bale center axis C.

Fig. 3 to Fig. 6 show a wrapping apparatus according to the embodiment with the rotatable wrapping table 49 in a horizontal viewing direction (Fig. 3) and in a vertical direction pointing upwards (Fig. 4 to Fig. 6). In Fig. 3 the vertical distance between the wrapping table 49 and the base plate 48 is shown exaggerated. The wrapping apparatus of the embodiment comprises the same parts than the wrapping apparatus of Fig. 1 and in addition the following parts:
- a locking disk 1 serves as the lockable member,
- two apertures 2.1, 2.2 in the locking disk 1 (shown only in Fig. 3 and Fig. 4),
- a locking body 4 which can selectively engage into one aperture 2.1 or 2.2,
- a helical spring 5 which tends to shift the locking body 4 towards the shaft 21, i.e. into an aperture 2.1 or 2.2,
- a piston-cylinder device 3 with a piston 7 which delimits the interior (cavity) of the cylinder into a base-side chamber 9 and a rod-side chamber 8 (adjacent to the shaft 21), and
- a hydraulic line 6.2 which connects the hydraulic line 6.1 (or the hydraulic motor 20) with the base-side chamber 9 (Fig. 3 to Fig. 6) or with the rod-side chamber 8 of the piston-cylinder device 3.

The locking disk 1 is rigidly connected with the vertical drive shaft 21 belonging to the transmission member and is therefore in drive connection with the wrapping table 49. An angle of approximately 90 degrees occurs between the two center axes of the two apertures 2.1, 2.2, cf. Fig. 4 to Fig. 6. The locking disk 1, the locking body 4, the piston-cylinder device 3, and the spring 5 belong to a locking device for the wrapping table 49. The piston-cylinder device 3 can pull the locking body 4 away from the shaft 21 and thereby out of an aperture 2.1, 2.2 against the retaining force of the spring 5. Fig. 3 and Fig. 5 show this locking device 1, 3, 4, 5 in a releasing mode. Fig. 4 and Fig. 6 show the locking device 1, 3, 4, 5 in a locking mode.

A similar arrangement can also be used for locking or releasing the reservoir holders 60.1, 60.2 of Fig. 2.

In the locking mode the locking body 4 selectively engages into one aperture 2.1 or 2.2 - depending on the rotational position of the locking disk 1. The spring 5 tends to keep the locking body 4 in this locking position. When being in the releasing position, the locking body 4 is kept in a position outside of the locking disk 1 and does not engage into one aperture 2.1, 2.2.

The locking body 4 in the releasing position (Fig. 5) does not inhibit a rotation of the locking disk 1 around the axis 22 caused by the rotation of the shaft 21. The piston-cylinder device 3 keeps the locking body 4 in this retracted releasing position against the retaining force of the spring 5 as long as the rod-side chamber 8 of the piston-cylinder device 3 is supplied with hydraulic fluid via the supply line 6.2 such that the piston 7 is moved away from the shaft 21.

For transferring the locking device 1, 3, 4, 5 from the locking mode into the releasing mode the locking body 4 is moved by the piston-cylinder device 3 from the locking position (Fig. 4, Fig. 6) to the releasing position (Fig. 3, Fig. 5). The locking body 4 is moved with respect to the axis 22 in a radial direction away from the shaft 21.

In the vertical upwards viewing direction of Fig. 4 to Fig. 6 the two rollers 54.1, 54.2 are positioned behind the locking disk 1. In Fig. 4 to Fig. 6 the conveying belts 41 and the bale B are not shown.

As can be seen in Fig. 4 to Fig. 6 two apertures 2.2, 2.1 are cut into the locking disk 1. Seen in a radial direction from the circumferential surface of the locking disk 1 to its rotating axis 22 every aperture 2.1, 2.2 tapers, i.e. its width decreases. This tapering shape provides an auto-correction of the rotational position of the locking disk 1 and thereby of the wrapping table 49 with respect to the base plate 48: When the locking body 4 is pushed by the spring 5 into an aperture 2.1, 2.2, the locking body 4 can slightly rotate the locking disk 1 if the locking disk 1 is not entirely in the proper position.

As the locking disk 1 is rigidly connected with the shaft 21 and the shaft 21 is rigidly connected with the wrapping table 49, the locking device 1, 3, 4, 5 being in the locking mode prevents a rotation of the wrapping table 49 and additionally ensures that the wrapping table 49 is exactly in the proper rotational position. This proper rotational position is used for loading a bale B on the wrapping table 49 or for unloading a wrapped bale B from the wrapping table 49. As the locking disk 1 has two apertures 2.1, 2.2, the wrapping table 49 can selectively be locked in two different defined rotational positions.

The wrapping apparatus according to the embodiment of Fig. 3 to Fig. 6 operates as follows:
- Before the wrapping apparatus starts the wrapping operation, the locking device 1, 3, 4, 5 is in the locking mode as shown in Fig. 4. The spring 5 presses and keeps the locking body 4 into the aperture 2.1. Therefore the wrapping table 49 is kept in a defined rotational position with respect to the rotating axis 22 and with respect to the supporting base plate 48. This rotational position is called the "bale loading position" and serves as the further rotational position Pos.f.
- The bale B which is to be wrapped is placed on the conveying belts 41. This bale placement can be performed by a lifting device (not shown) belonging to the wrapping apparatus or by a separated lifting apparatus. The wrapping table 49 is kept in the bale loading position Pos.f while the bale B is loaded onto the wrapping table 49.
- The hydraulic motor 20 is supplied with fluid through the line 6.1. This triggers the steps that further fluid is guided through the hydraulic line 6.2 into the rod-side chamber 8 and activates the piston-cylinder device 3 by enlarging the rod-side chamber 8.
- The moved piston 7 of the piston-cylinder device 3 pulls the locking body 4 out of the aperture 2.1. Thereby the locking device 1, 3, 4, 5 is transferred into the releasing mode which is shown in Fig. 3 and Fig. 5. In addition hydraulic fluid is pressed out of the base-side chamber 9 into an accumulator or further fluid reservoir (not shown).
- The hydraulic motor 20 rotates the shaft 21 around the rotating axis 22. Thereby the bale B is rotated around the vertical axis 51. The locking body is entirely outside of the circumferential surface of the rotating locking disk 1. In addition the conveying belts 41 are driven and rotate the bale B around the horizontal axis C.
- As soon as the bale B is entirely wrapped, the supply of the hydraulic motor 20 with hydraulic fluid through the line 6.1 is terminated. Thereby no hydraulic fluid is guided through the hydraulic line 6.2. The piston-cylinder device 3 is no longer activated. The spring 5 shifts the locking body 4 towards the shaft 21.
- The rotation of the wrapping table 49 is synchronized with the termination of the wrapping procedure. This synchronization is performed such that the wrapping table 49 stops its rotation when the other aperture 2.2 is adjacent to the locking device 1, 3, 4, 5. The rod-side chamber 8 is no longer supplied with fluid. Therefore the locking body 4 engages into the aperture 2.2 after the bale wrapping is completed. The locking device 1, 3, 4, 5 is again in a locking mode, cf. Fig. 6.
- The wrapping table 49 with the wrapped bale B is in a defined unloading rotational position with respect to the base plate 48. This rotational position is called the "bale unloading position" and serves as the unloading rotational position Pos.u. An angle of 90 degrees between the bale loading position Pos.f and the bale unloading position Pos.u occurs. This angle is defined by the angle between the apertures 2.1 and 2.2.
- The wrapped bale B is unloaded while the wrapping table 49 is kept in the bale unloading position Pos.u.
- For unloading the wrapped bale B, the wrapping table 49 is preferably tilted around a horizontal axis which is perpendicular to the horizontal axis C. Thereby the wrapped bale B is deposited onto a front face 65 on the ground.

In one implementation the tilting of the wrapping table 49 causes the web to touch a stationary cutting edge (not shown). The cutting edge severs the web. Preferably a clamping device (not shown) clamps the web to be severed. In a further implementation the web is severed before the wrapping table 49 with the bale B is tilted.

Thanks to the tapering shape of the apertures 2.1, 2.2 the locking device performs an automatic correction of the rotational position when the locking body 4 is moved into the aperture 2.1 or 2.2 as follows: When the wrapping table 49 is not exactly in the proper rotational position, the locking body 4 touches a lateral wall of an aperture 2.1, 2.2 and slightly rotates the locking disk 1 and thereby the wrapping table 49 around the vertical axis 22.

Reference signs used in the claims will not limit the scope of the claimed invention. The term "comprises" does not exclude other elements or steps. The articles "a", "an", and "one" do not exclude a plurality of elements. Features specified in several depending claims may be combined in an advantageous manner.

**LIST OF REFERENCE SIGNS**

| | |
|---|---|
| 1 | locking disk with the apertures 2.1, 2.2, rigidly connected with the shaft 21 |
| 2.1 | tapering aperture in the locking disk 1, used when loading the bale B on the wrapping table 49 |
| 2.2 | further tapering aperture in the locking disk 1, used when unloading the wrapped bale B from the wrapping table 49 by tilting it |
| 3 | piston-cylinder device, retracts the locking body 4 out of the aperture 2.1, 2.2 in the locking disk 1 |
| 4 | locking body, moved by the piston-cylinder device 3 and the spring 5 |
| 5 | helical spring, biases the locking body 4 into the aperture 2.1, 2.2 |
| 6.1 | hydraulic line, guides fluid into the hydraulic motor 20 |
| 6.2 | hydraulic line, guides fluid into the piston-cylinder device 3 |
| 7 | piston of the piston-cylinder device 3 |
| 8 | rod-side chamber of the piston-cylinder device 3, supplied with fluid via the line 6.2 |
| 9 | base-side chamber of the piston-cylinder device 3 |
| 11 | transmission member, comprises the shaft 21 and the locking disk 1 |
| 13 | grip arms for moving a bale B onto the wrapping table 49 |
| 15 | towing unit of the wrapping apparatus |
| 20 | hydraulic motor for rotating the shaft 21 |
| 21 | driven shaft for driving the wrapping table 49, belongs to the transmission member |
| 23.1, 23.2 | ground-engaging wheels |
| 31 | vertical rotating axis of the supply roll 58 |
| 41 | conveying belts of the wrapping table 49, rotate the bale B around the horizontal axis C |
| 42 | loading structure, comprises the loading arms 44, the loading frame 45, the gripping arms 46, and the hydraulic actuator 43 |
| 43 | hydraulic actuator for the loading structure 42 |
| 44 | loading arms of the loading structure 42 |
| 45 | loading frame of the loading structure 42 |
| 46 | gripping arms of the loading structure 42 |
| 48 | supporting base plate or frame of the wrapping apparatus |
| 49 | wrapping table, comprises the belts 41, the rollers 54.1, 54.2, and the wrapping table frame 53 |
| 50 | circumferential surface of the bale B |
| 51 | motor for rotating the holders 60.1, 60.2 |
| 52 | endless chain driving the roller 54.1 |
| 53 | wrapping table frame, carries the rollers 54.1, 54.2 |
| 54.1, 54.2 | rollers for conveying the belts 41, rotatably mounted at the wrapping table frame 53 |
| 56 | direction in which the wrapping table 49 rotates the bale B around the axis C |
| 57 | segment of the plastic sheet web between supply roll 58 and bale B |
| 58, 58.1, 58.2 | supply rolls with plastic sheet |
| 59, 63 | sensor for detecting plastic sheet on the front face 65 of the bale B |
| 60, 60.1, 60.2 | holder for the sheet supply roll 58, 58.1, 58.2 |
| 61 | segment of the plastic sheet web 57 placed on the circumferential surface 50 of the bale B |
| 62 | unwrapped area of the bale B |
| 65 | front face of the bale B |
| 67 | segment of the plastic sheet web 57 placed on the front face 65 of the bale B |
| 69 | direction in which the supply roll 58 is rotated when a web 57 is pulled from it |
| 70 | further segment of the plastic sheet web placed on the front face 65 of the bale B |
| 71, 75, 76 | sensors for detecting plastic sheet 57 on the circumferential surface 50 of the bale B |
| B | round-cylindrical bale, serves as the object to be wrapped |
| C | center axis of the bale B, serves as the object rotating axis around which the wrapping table 49 rotates the object B to be wrapped |
| D | vertical distance over which the supply roll 58 can be moved up and down with respect to the wrapping table 48 |
| G | ground over which the wrapping apparatus is moved |
| O | Overlap between two layers of web 57 placed on the bale B |
| Pos.f | further rotational position of the wrapping table 49 |
| Pos.u | unloading rotational position of the wrapping table 49 |
| R | direction in which the wrapping table 49 and the bale B are rotated |
| X | rotating axis of the shaft 21, coincides with the wrapping part rotating axis Y of the wrapping table 49 |
| Y | vertical rotation axis around which the wrapping table 49 is rotated, serves as the wrapping part rotating axis |

## Claims

1. Wrapping apparatus for wrapping an object (B),
wherein the wrapping apparatus comprises
- a frame (48),
- a wrapping table (49),
- a wrapping part rotating motor (20, 51),
- at least one reservoir holder (60, 60.1, 60.2) for holding a reservoir (58, 58.1, 58.2) of wrapping material, and
- a locking device (3, 4, 5) being selectively operable in a releasing mode or in an unloading locking mode,
wherein the wrapping table (49) is arranged to carry the object (B) to be wrapped, wherein the wrapping table (49) is implemented as a rotatable wrapping apparatus part which is rotatable with respect to the frame (48) around a wrapping part rotating axis (Y),
wherein the wrapping part rotating motor (20, 51) is arranged to rotate the rotatable wrapping apparatus part (49, 60.1, 60.2) around the wrapping part rotating axis (Y),
thereby causing a movement of the carried object (B) with respect to the or at least one reservoir (58, 58.1, 58.2) held by the or one reservoir holder (60, 60.1, 60.2) and causing the carried object (B) to be wrapped,
wherein the locking device (3, 4, 5) being in the releasing mode enables a rotation of the rotatable wrapping apparatus part (49, 60.1, 60.2) around the wrapping part rotating axis (Y),
wherein the locking device (3, 4, 5) being in the unloading locking mode locks the rotatable wrapping apparatus part (49, 60.1, 60.2) in an unloading rotational position (Pos.u) with respect to the frame (48) and
wherein the wrapping apparatus is arranged to unload the object (B) or to enable the unloading of the object (B) from the wrapping table (49) when the rotatable wrapping apparatus part (49, 60.1, 60.2) is locked by the locking device (3, 4, 5) being in the unloading locking mode,
**characterized in that**
the locking device (3, 4, 5) is operable in at least one further locking mode differing from the unloading locking mode,
wherein the locking device (3, 4, 5) being in the or one further locking mode locks the rotatable wrapping apparatus part (49, 60.1, 60.2) in a further rotational position (Pos.f) with respect to the frame (48),
wherein the further rotational position (Pos.f) differs from the unloading rotational position (Pos.u).

2. Wrapping apparatus according to claim 1,
**characterized in that**
an angle of 90 degrees occurs between the unloading rotational position (Pos.u) and the further rotational position (Pos.f) of the rotatable wrapping apparatus part (49, 60.1, 60.2).

3. Wrapping apparatus according to claim 1,
**characterized in that**
an angle of 180 degrees occurs between the unloading rotational position (Pos.u) and the further rotational position (Pos.f) of the rotatable wrapping apparatus part (49, 60.1, 60.2).

4. Wrapping apparatus according to one of the preceding claims,
**characterized in that**
the wrapping apparatus is arranged
- to transfer the locking device (3, 4, 5) in the or one further locking mode before the object (B) to be wrapped is placed onto the wrapping table (49), thereby locking the rotatable wrapping apparatus part (49, 60.1, 60.2) in the or one further rotational position (Pos.f) with respect to the frame (48),
- to keep the locking device (3, 4, 5) in the further locking mode while the object (B) is placed onto the wrapping table (49),
- to transfer the locking device (3, 4, 5) into the releasing mode before the wrapping part rotating motor (20, 51) starts to rotate the rotatable wrapping apparatus part (49, 60.1, 60.2), and
- to transfer the locking device (3, 4, 5) in the unloading locking mode before the object (B) is unloaded,
thereby locking the rotatable wrapping apparatus part (49, 60.1, 60.2) in the unloading rotational position (Pos.u) with respect to the frame (48).

5. Wrapping apparatus according to one of the preceding claims,
**characterized in that**
the wrapping apparatus is arranged to unload the object (B) or to enable the unloading of the object (B) from the wrapping table (49)
also when the rotatable wrapping apparatus part (49, 60.1, 60.2) is locked in the or one further rotational position (Pos.f).

6. Wrapping apparatus according to one of the preceding claims,
**characterized in that**
the wrapping apparatus comprises a transmission member (11) connecting
- the wrapping part rotating motor (20, 51) with
- the rotatable wrapping apparatus part (49, 60.1, 60.2),
wherein the wrapping part rotating motor (20, 51) is arranged to drive the transmission member (11),
wherein the driven transmission member (11) is arranged to rotate the rotatable wrapping apparatus part (49, 60.1, 60.2) around the wrapping part rotating axis (Y),
wherein the locking device (3, 4, 5) being in the unloading locking mode
- locks the transmission member (11) in an unloading mode and
- inhibits a movement of the transmission member (11), thereby locking the rotatable wrapping apparatus part (49, 60.1, 60.2) in the unloading rotational position (Pos.u), and
wherein the locking device being in the or at least one further locking mode
- locks the transmission member (11) in a corresponding further mode and
- inhibits a movement of the transmission member (11), thereby locking the rotatable wrapping apparatus part (49, 60.1, 60.2) in the or one further rotational position (Pos.f).

7. Wrapping apparatus according to claim 6,
**characterized in that**
the locking device (3, 4, 5) being in the unloading locking mode locks the transmission member (11) in an unloading locking position with respect to the frame (48) and
the locking device (3, 4, 5) being in the or one further locking mode locks the transmission member (11) in a further locking position,
wherein locking the transmission member (11) in the unloading locking position locks the rotatable wrapping apparatus part (49, 60.1, 60.2) in the unloading rotational position (Pos.u) and
wherein locking the transmission member (11) in the further locking position locks the rotatable wrapping apparatus part (49, 60.1, 60.2) in the further rotational position (Pos.f).

8. Wrapping apparatus according to claim 6 or claim 7,
**characterized in that**
the transmission member (11) comprises a rotatable transmission member part (1, 2.1, 2.2, 21) being in drive connection with the rotatable wrapping apparatus part (49, 60.1, 60.2),
wherein the wrapping part rotating motor (20, 51) is arranged to rotate the rotatable transmission member part (1, 2.1, 2.2, 21),
wherein the locking device (3, 4, 5) being in the unloading locking mode locks the transmission member part (1, 2.1, 2.2, 21) with respect to the frame (48) in an unloading rotational position,
wherein the locking device (3, 4, 5) being in the or every further locking mode locks the transmission member part (1, 2.1, 2.2, 21) in a further rotational position, wherein the transmission member part (1, 2.1, 2.2, 21) being locked in the unloading rotational position locks the rotatable wrapping apparatus part (49, 60.1, 60.2) in the unloading rotational position (Pos.u) and
wherein the transmission member part (1, 2.1, 2.2, 21) being locked in the further rotational position locks the rotatable wrapping apparatus part (49, 60.1, 60.2) in the further rotational position (Pos.f).

9. Wrapping apparatus according to claim 8,
**characterized in that**
an angle of 90 degrees occurs between the unloading rotational position and the further rotational position of the transmission member part (1, 2.1, 2.2, 21).

10. Wrapping apparatus according to claim 8 or claim 9,
**characterized in that**
the locking device (3, 4, 5) comprises
- a locking body (4) being movable into a locking position and into a releasing position and
- a locking body actuator (3, 5) for moving the locking body (4) between these two positions,
wherein the rotatable transmission member part (1, 2.1, 2.2, 21) is rotatable with respect to the locking body (4) at least
- into the unloading rotational position and
- into the or at least one further rotational position,
wherein the locking body (4) being in the locking position inhibits a rotation of the transmission member part (1, 2.1, 2.2, 21) and
wherein the rotatable transmission member part (1, 2.1, 2.2, 21) is selectively lockable
- in the unloading rotational position or
- in the or every further rotational unloading position
by the locking body (4) being in the locking position.

11. Wrapping apparatus according to one of the preceding claims,
**characterized in that**
the wrapping apparatus comprises a lockable member (1, 2.1, 2.2) being in drive connection (21) with the rotatable wrapping apparatus part (49, 60.1, 60.2) and the locking device (3, 4, 5) comprises
- a locking body (4) being movable into a locking position and into a releasing position and
- a locking body actuator (3, 5) for moving the locking body (4) between these two positions,
wherein a first aperture (2.1) and a second aperture (2.2) are positioned in the lockable member (1, 2.1, 2.2),
wherein the lockable member (1, 2.1, 2.2) is moveable with respect to the locking body (4),
wherein the locking body (4) being in the locking position selectively engages into the first aperture (2.1) or into the second aperture (2.2),
wherein the locking body (4) engaging into the first aperture (2.1) is in the or one further locking mode and locks the rotatable wrapping apparatus part (49, 60.1, 60.2) in the or one further rotational position (Pos.f), and
wherein the locking body (4) engaging into the second aperture (2.2) is in the unloading locking mode and locks the locks the rotatable wrapping apparatus part (49, 60.1, 60.2) in the unloading rotational position (Pos.u).

12. Wrapping apparatus according to claim 11,
**characterized in that**
the wrapping apparatus comprises a transmission member (11) connecting the wrapping part rotating motor (20, 51) with the rotatable wrapping apparatus part (49, 60.1, 60.2),
wherein the wrapping part rotating motor (20, 51) is arranged to drive the transmission member (11),
wherein the driven transmission member (11) is arranged to rotate the rotatable wrapping apparatus part (49, 60.1, 60.2) around the wrapping part rotating axis (Y), and
wherein the lockable member (1, 2.1, 2.2) is in drive connection with a part (21) of the transmission member (11).

13. Wrapping apparatus according to claim 11 or claim 12,
**characterized in that**
at least one aperture (2.1, 2.2) tapers seen **in that** direction in which the locking body (4) is movable into the locking position.

14. Wrapping apparatus according to one of the claims 11 to 13,
**characterized in that**
the lockable member (1, 2.1, 2.2) can rotate with respect to the locking body (4) around a lockable member rotating axis (X),
wherein the locking body (4) engaging into one aperture (2.1, 2.2) inhibits a rotation of the lockable member (1, 2.1, 2.2) with respect to the frame (48) around the lockable member rotating axis (X) and
wherein the locking body (4) being in the releasing position enables a rotation of the lockable member (1, 2.1, 2.2) around the lockable member rotating axis (X).

15. Wrapping apparatus according to one of the preceding claims,
**characterized in that**
the wrapping apparatus further comprises an object rotating motor,
wherein the object rotating motor is arranged to move at least one movable part (54.1, 54.2) of the wrapping table (49),
thereby causing the object (B) on the wrapping table (49) to rotate with respect to the frame (48) around an object rotating axis (C),
wherein the object rotating axis (C) is perpendicular or angular to the wrapping part rotating axis (Y).

16. Wrapping apparatus according to one of the preceding claims,
**characterized in that**
the wrapping table (49) serves as the or one rotatable wrapping apparatus part, wherein the wrapping part rotating motor (20) is arranged to rotate the wrapping table (49) carrying an object (B) with respect to the frame (48) around the wrapping part rotating axis (Y).

17. Wrapping apparatus according to one of the preceding claims,
**characterized in that**
the or at least one reservoir holder (58.1, 58.2) serves as the or one rotatable wrapping apparatus part,
wherein the wrapping part rotating motor (20) is arranged to rotate the or one reservoir holder (58.1, 58.2) holding a reservoir (60.1, 60.2) with respect to the frame (48) around the wrapping part rotating axis (Y).

18. Method for wrapping at least one object (B)
by using a wrapping apparatus comprising
- a frame (48),
- a wrapping table (49),
- a wrapping part rotating motor (20, 51),
- at least one reservoir holder (60, 60.1, 60.2) for holding a reservoir (58, 58.1, 58.2) of wrapping material, and
- a locking device (3, 4, 5) being selectively operable in a releasing mode or in an unloading locking mode,
wherein the wrapping table (49) is implemented as a rotatable wrapping apparatus part which is rotatable with respect to the frame (48) around a wrapping part rotating axis (Y) and
wherein the method comprises the steps that
- the or one object (B) to be wrapped is placed on the wrapping table (49),
- the wrapping part rotating motor (20, 51) rotates the rotatable wrapping apparatus part (49, 60.1, 60.2) with respect to the frame (48) around the wrapping part rotating axis (Y) while the locking device (3, 4, 5) is in the releasing mode,
- the rotation of the rotatable wrapping apparatus part (49, 60.1, 60.2) causes the object (B) carried on the wrapping table (49) to be moved with respect to at least one reservoir (58, 58.1, 58.2) held by the or one reservoir holder (60, 60.1, 60.2),
- the wrapping part rotating motor (20, 51) terminates the step of rotating the rotatable wrapping apparatus part (49, 60.1, 60.2) such that the carried object (B) is wrapped,
- the locking device (3, 4, 5) is transferred into the unloading locking mode,
- the rotatable wrapping apparatus part (49, 60.1, 60.2) is locked by the locking device (3, 4, 5) being in the unloading locking mode, and
- the object (B) is unloaded from the wrapping table (49) while the rotatable wrapping apparatus part (49, 60.1, 60.2) is locked by the locking device (3, 4, 5),
wherein the step that the locking device (3, 4, 5) is transferred into the unloading locking mode causes the step that
the locking device (3, 4, 5) inhibits a rotation of the rotatable wrapping apparatus part (49, 60.1, 60.2) around the wrapping part rotating axis (Y) such that the rotatable wrapping apparatus part (49, 60.1, 60.2) is locked in an unloading rotational position (Pos.u) with respect to the frame **(48),characterized in that** the locking device (3, 4, 5) is operable in at least one further locking mode differing from the unloading locking mode,
wherein the method comprises the further step that
the locking device (3, 4, 5) is transferred in the or one further locking mode such that the rotatable wrapping apparatus part (49, 60.1, 60.2) is locked in a further rotational position (Pos.f) with respect to the frame (48) and
wherein the further rotational position (Pos.f) differs from the unloading rotational position (Pos.u).

19. Wrapping method according to claim 18,
**characterized in that**
the locking device (3, 4, 5) is operated in the or one further locking mode when the or one object (B) is placed on the wrapping table (49)
such that the object (B) is placed on the wrapping table (49) while the rotatable wrapping apparatus part (49, 60.1, 60.2) is locked with respect to the frame (48) in the or one further rotational position (Pos.f) and
the locking device (3, 4, 5) is transferred into the releasing mode before the wrapping part rotating motor (20, 51) starts to rotate the rotatable wrapping apparatus part (49, 60.1, 60.2).

20. Wrapping method according to claim 18 or claim 19,
**characterized in that**
the method comprises the further steps that
- a further object to be wrapped is placed on the wrapping table (49),
- the rotatable wrapping apparatus part (49, 60.1, 60.2) is rotated with respect to the frame (48) around the wrapping part rotating axis (Y) while the wrapping table (49) carries the further object and the locking device (3, 4, 5) is in the releasing mode,
- the further object on the wrapping table (49) is wrapped,
- the locking device (3, 4, 5) is transferred into the or one further locking mode such that the rotatable wrapping apparatus part (49, 60.1, 60.2) is locked with respect to the frame (48) in the or one further rotational position (Pos.f), and
- the further object is unloaded from the wrapping table (49) while the rotatable wrapping apparatus part (49, 60.1, 60.2) is locked in the further rotational position (Pos.f).

21. Wrapping method according to one of the claims 18 to 20,
**characterized in that**
the wrapping apparatus comprises a transmission member (11) connecting
- the wrapping part rotating motor (20, 51) with
- the rotatable wrapping apparatus part (49, 60.1, 60.2),
wherein the step that the wrapping part rotating motor (20, 51) rotates the rotatable wrapping apparatus part (49, 60.1, 60.2) comprises the steps that
- the wrapping part rotating motor (20, 51) drives the transmission member (11) while the locking device (3, 4, 5) is in the releasing mode and
- the driven transmission member (11) rotates the rotatable wrapping apparatus part (49, 60.1, 60.2) with respect to the frame (48) around the wrapping part rotating axis (Y),
the step that the locking device (3, 4, 5) is transferred into the unloading locking mode and inhibits a rotation of the rotatable wrapping apparatus part (49, 60.1, 60.2) comprises the step that
- the locking device (3, 4, 5) inhibits a movement of the transmission member (11)
- such that the rotatable wrapping apparatus part (49, 60.1, 60.2) is locked in the unloading rotational position (Pos.u), and
the step that the locking device (3, 4, 5) is transferred into the further locking mode and inhibits a rotation of the rotatable wrapping apparatus part (49, 60.1, 60.2) comprises the step that
- the locking device (3, 4, 5) inhibits a movement of the transmission member (11)
- such that the rotatable wrapping apparatus part (49, 60.1, 60.2) is locked in the further rotational position (Pos.f).

22. Wrapping method according to claim 21,
**characterized in that**
the transmission member (11) comprises a rotatable transmission member part (1, 2.1, 2.2, 21),
wherein the step that the wrapping part rotating motor (20, 51) drives the transmission member (11) comprises the step that
the wrapping part rotating motor (20, 51) rotates the rotatable transmission member part (1, 2.1, 2.2, 21),
wherein the step that the driven transmission member (11) rotates the rotatable wrapping apparatus part (49, 60.1, 60.2) comprises the step that the rotated transmission member part (1, 2.1, 2.2, 21) rotates the rotatable wrapping apparatus part (49, 60.1, 60.2),
wherein the step that the locking device (3, 4, 5) being in the unloading locking mode
inhibits a movement of the transmission member (11) comprises the step that the locking device (3, 4, 5) being in the unloading locking mode locks the rotatable transmission member part (1, 2.1, 2.2, 21) in a unloading rotational position corresponding to the unloading rotational position (Pos.u) of the rotatable wrapping apparatus part (49, 60.1, 60.2) and
the step that the locking device (3, 4, 5) being in the or one further locking mode inhibits a movement of the transmission member (11) causes the step that the locking device (3, 4, 5) being in the or one further locking mode locks the rotatable transmission member part (1, 2.1, 2.2, 21) in a further rotational position corresponding to the further rotational position (Pos.f) of the rotatable wrapping apparatus part (49, 60.1, 60.2).

23. Wrapping method according to one of the claims 18 to 22,
**characterized in that**
the wrapping apparatus comprises a lockable member (1, 2.1, 2.2) being in drive connection (21) with the rotatable wrapping apparatus part (49, 60.1, 60.2) and the locking device (3, 4, 5) comprises
- a locking body (4) being moveable into a locking position and into a releasing position and
- a locking body actuator (3, 5) for moving the locking body (4) between these two positions,
wherein a first aperture (2.1) and a second aperture (2.2) are positioned in the lockable member (1, 2.1, 2.2),
wherein the step that the locking device (3, 4, 5) is transferred into the unloading locking mode comprises the steps that
- the lockable member (1, 2.1, 2.2) is moved with respect to the locking body (4) in a position in which the second aperture (2.2) is adjacent to the locking body (4) being in the releasing mode,
- the locking body actuator (3, 5) moves the locking body (4) into the locking position, and
- the moved locking body (4) engages into the second aperture (2.2) and
the step that the locking device (3, 4, 5) is transferred into the or one further locking mode comprises the steps that
- the lockable member (1, 2.1, 2.2) is moved with respect to the locking body (4) in
- a position in which the first aperture (2.1) is adjacent to the locking body (4) being in the releasing mode,
- the locking body actuator (3, 5) moves the locking body (4) into the locking position, and
- the moved locking body (4) engages into the first aperture (2.1).

## Patentansprüche

1. Einwickelvorrichtung zum Einwickeln eines Objekts (B), wobei die Einwickelvorrichtung Folgendes aufweist:
- einen Rahmen (48),
- einen Einwickeltisch (49),
- einen Einwickelteilrotationsmotor (20, 51),
- mindestens einen Vorratshalter (60, 60.1, 60.2) zum Aufnehmen eines Vorrats (58, 58.1, 58.2) an Einwickelmaterial, und
- eine Sperrvorrichtung, die wahlweise in einem Lösemodus oder in einem Entlade-Sperrmodus betreibbar ist,
wobei der Einwickeltisch (49) dazu angeordnet ist, das einzuwickelnde Objekt (B) zu tragen, wobei der Einwickeltisch (49) als rotierbarer Einwickelvorrichtungsteil ausgebildet ist, der relativ zu dem Rahmen (48) um eine Einwickelteilrotationsachse (Y) rotierbar ist,
wobei der Einwickelteilrotationsmotor (20, 51) dazu angeordnet ist, den rotierbaren Einwickelvorrichtungsteil (49, 60.1, 60.2) um die Einwickelteilrotationsachse (Y) zu rotieren,
wodurch eine Bewegung des getragenen Objekts (B) relativ zu dem oder mindestens einem durch den oder einen Vorratshalter (60, 60.1, 60.2) aufgenommen Vorrat bewirkt wird und bewirkt wird, dass das getragene Objekt (B) eingewickelt wird,
wobei die Sperrvorrichtung (3, 4, 5), wenn sie sich im Lösemodus befindet, eine Rotation des rotierbaren Einwickelvorrichtungsteils (49, 60.1, 60.2) um die Einwickelteilrotationsachse (Y) bewirkt,
wobei die Sperrvorrichtung (3, 4, 5), wenn sie sich im Entlade-Sperrmodus befindet, den rotierbaren Einwickelvorrichtungsteil (49, 60.1, 60.2) in einer Entlade-Rotationsposition (Pos.u) relativ zu dem Rahmen (48) sperrt und
wobei die Einwickelvorrichtung dazu angeordnet ist, das Objekt (B) zu entladen oder das Entladen des Objekts (B) von dem Einwickeltisch (49) zu erlauben, wenn der rotierbare Einwickelvorrichtungsteil (49, 60.1, 60.2) durch die sich im Entlade-Sperrmodus befindende Sperrvorrichtung (3, 4, 5) gesperrt ist, **dadurch gekennzeichnet, dass**
die Sperrvorrichtung in mindestens einem weiteren, sich von dem Entlade-Sperrmodus unterscheidenden Sperrmodus betreibbar ist,
wobei die Sperrvorrichtung (49, 60.1, 60.2), wenn sie sich in dem oder einem weiteren Sperrmodus befindet, den rotierbaren Einwickelvorrichtungsteil (49, 60.1, 60.2) in einer weiteren Rotationsposition (Pos.f) relativ zu dem Rahmen (48) sperrt,
wobei sich die weitere Rotationsposition (Pos.f) von der Entlade-Rotationsposition (Pos.u) unterscheidet.

2. Einwickelvorrichtung nach Anspruch 1, **dadurch gekennzeichnet, dass** ein Winkel von 90 Grad zwischen der Entlade-Rotationsposition (Pos.u) und der weiteren Rotationsposition (Pos.f) des rotierbaren Einwickelvorrichtungsteils (49, 60.1, 60.2) auftritt.

3. Einwickelvorrichtung nach Anspruch 1, **dadurch gekennzeichnet, dass** ein Winkel von 180 Grad zwischen der Entlade-Rotationsposition (Pos.u) und der weiteren Rotationsposition (Pos.f) des rotierbaren Einwickelvorrichtungsteils (49, 60.1, 60.2) auftritt.

4. Einwickelvorrichtung nach einem der vorhergehenden Ansprüche, **dadurch gekennzeichnet, dass**
die Einwickelvorrichtung dazu angeordnet ist,
- die Sperrvorrichtung (3, 4, 5) in den oder einen weiteren Sperrmodus zu überführen, bevor das einzuwickelnde Objekt (B) auf dem Einwickeltisch (49) platziert wird, wodurch sie den rotierbaren Einwickelvorrichtungsteil (49, 60.1, 60.2) in der oder einer weiteren Rotationsposition (Pos.f) relativ zu dem Rahmen (48) sperrt,
- die Sperrvorrichtung (3, 4, 5) in dem weiteren Sperrmodus zu halten, während das einzuwickelnde Objekt (B) auf dem Einwickeltisch (49) platziert wird,
- die Sperrvorrichtung (3, 4, 5) in den Lösemodus zu überführen, bevor der Einwickelteilrotationsmotor (20, 51) beginnt, den rotierbaren Einwickelvorrichtungsteil (49, 60.1, 60.2) zu rotieren, und
- die Sperrvorrichtung (3, 4, 5) in den Entlade-Sperrmodus zu überführen, bevor das Objekt (B) abgeladen wird,
wodurch sie den rotierbaren Einwickelvorrichtungsteil (49, 60.1, 60.2) in der Entlade-Rotationsposition (Pos.u) relativ zu dem Rahmen (48) sperrt.

5. Einwickelvorrichtung nach einem der vorhergehenden Ansprüche, **dadurch gekennzeichnet, dass** die Einwickelvorrichtung dazu angeordnet ist, das Objekt (B) zu entladen oder das Entladen des Objekts (B) von dem Einwickeltisch (49) zu erlauben, auch wenn der rotierbare Einwickelvorrichtungsteil (49, 60.1, 60.2) in der oder einer weiteren Rotationsposition (Pos.f) gesperrt ist.

6. Einwickelvorrichtung nach einem der vorhergehenden Ansprüche, **dadurch gekennzeichnet, dass**
die Einwickelvorrichtung ein Übertragungselement (11) aufweist, das
- den Einwickelteilrotationsmotor (20, 51) mit
- dem rotierbaren Einwickelvorrichtungsteil (49, 60.1, 60.2)
verbindet,
wobei der Einwickelteilrotationsmotor (20, 51) dazu angeordnet ist, das Übertragungselement (11) anzutreiben,
wobei das angetriebene Übertragungselement (11) dazu angeordnet ist, den rotierbaren Einwickelvorrichtungsteil (49, 60.1, 60.2) um die Einwickelteilrotationsachse (Y) zu rotieren, wobei die Sperrvorrichtung (3, 4, 5), wenn sie sich in dem Entlade-Sperrmodus befindet,
- das Übertragungselement (11) in einem Entlademodus sperrt und
- eine Bewegung des Übertragungselements (11) verhindert, wodurch sie den rotierbaren Einwickelvorrichtungsteil (49, 60.1, 60.2) in der Entlade-Rotationsposition (Pos.u) sperrt, und
wobei die Sperrvorrichtung, wenn sie sich in dem oder mindestens einem weiteren Sperrmodus befindet,
- das Übertragungselement (11) in einem entsprechenden weiteren Modus sperrt und
- eine Bewegung des Übertragungselements (11) verhindert, wodurch sie den rotierbaren Einwickelvorrichtungsteil (49, 60.1, 60.2) in der oder einer weiteren Rotationsposition (Pos.f) sperrt.

7. Einwickelvorrichtung nach Anspruch 6, **dadurch gekennzeichnet, dass**
die Sperrvorrichtung (3, 4, 5), wenn sie sich im Enlade-Sperrmodus befindet, das Übertragungselement (11) in einer Entlade-Sperrposition relativ zu dem Rahmen (48) sperrt und
die Sperrvorrichtung (3, 4, 5), wenn sie sich in dem oder einem weiteren Sperrmodus befindet, das Übertragungselement (11) in einer weiteren Sperrposition sperrt,
wobei das Sperren des Übertragungselements (11) in der Entlade-Sperrposition den rotierbaren Einwickelvorrichtungsteil (49, 60.1, 60.2) in der Entlade-Rotationsposition (Pos.u) sperrt und wobei das Sperren des Übertragungselements (11) in der weiteren Sperrposition den rotierbaren Einwickelvorrichtungsteil (49, 60.1, 60.2) in der weiteren Rotationsposition (Pos.f) sperrt.

8. Einwickelvorrichtung nach Anspruch 6 oder Anspruch 7, **dadurch gekennzeichnet, dass** das Übertragungselement (11) einen rotierbaren Übertragungselementteil (1, 2.1, 2.2, 21) aufweist, der in Antriebsverbindung mit dem rotierbaren Einwickelvorrichtungsteil (49, 60.1, 60.2) steht,
wobei der Einwickelteilrotationsmotor (20, 51) dazu angeordnet ist, den drehbaren Übertragungselementteil (1, 2.1, 2.2, 21) zu rotieren,
wobei die Sperrvorrichtung (3, 4, 5), wenn sie sich im Entlade-Sperrmodus befindet, den Übertragungselementteil (1, 2.1, 2.2, 21) relativ zu dem Rahmen (48) in einer Entlade-Rotationsposition sperrt,
wobei die Sperrvorrichtung (3, 4, 5), wenn sie sich in dem oder jedem weiteren Sperrmodus befindet, den Übertragungselementteil (1, 2.1, 2.2, 21) in einer weiteren Rotationsposition sperrt, wobei der Übertragungselementteil (1, 2.1, 2.2, 21), wenn er in der Entlade-Rotationsposition gesperrt ist, den rotierbaren Einwickelvorrichtungsteil (49, 60.1, 60.2) in der Entlade-Rotationsposition (Pos.u) sperrt und
wobei der Übertragungselementteil (1, 2.1, 2.2, 21), wenn er in der weiteren Rotationsposition gesperrt ist, den rotierbaren Einwickelvorrichtungsteil (49, 60.1, 60.2) in der weiteren Rotationsposition (Pos.f) sperrt.

9. Einwickelvorrichtung nach Anspruch 8, **dadurch gekennzeichnet, dass** ein Winkel von 90 Grad zwischen der Entlade-Rotationsposition und der weiteren Rotationsposition des Übertragungselementteils (1, 2.1, 2.2, 21) auftritt.

10. Einwickelvorrichtung nach Anspruch 8 oder Anspruch 9, **dadurch gekennzeichnet, dass** die Sperrvorrichtung (3, 4, 5) Folgendes aufweist:
- einen Sperrkörper (4), der in eine Sperrposition und eine Löseposition beweglich ist, und
- einen Sperrkörperaktuator (3, 5) zum Bewegen des Sperrkörpers (4) zwischen diesen beiden Positionen,
wobei der rotierbare Übertragungselementteil (1, 2.1, 2.2, 21) relativ zu dem Sperrkörper (4) wenigstens
- in die Entlade-Rotationsposition und
- in die oder mindestens eine weitere Rotationsposition
rotierbar ist,
wobei der Sperrkörper (4), wenn er sich in der Sperrposition befindet, eine Rotation des Übertragungselementteils (1, 2.1, 2.2, 21) verhindert und
wobei der rotierbare Übertragungselementteil (1, 2.1, 2.2, 21) wahlweise
- in der Entlade-Rotationsposition oder
- in der oder jeder weiteren Rotations-Entladeposition
sperrbar ist,
indem sich der Sperrkörper (4) in der Sperrposition befindet.

11. Einwickelvorrichtung nach einem der vorhergehenden Ansprüche, **dadurch gekennzeichnet, dass**
die Einwickelvorrichtung ein sperrbares Element (1, 2.1, 2.2) aufweist, das sich in Antriebsverbindung (21) mit dem drehbaren Einwickelvorrichtungsteil (49, 60.1, 60.2) befindet, und
die Sperrvorrichtung (3, 4, 5) Folgendes aufweist:
- einen Sperrkörper (4), der in eine Sperrposition und eine Löseposition beweglich ist, und
- einen Sperrkörperaktuator (3, 5) zum Bewegen des Sperrkörpers (4) zwischen diesen beiden Positionen,
wobei eine erste Öffnung (2.1) und eine zweite Öffnung (2.2) in dem sperrbaren Element (1, 2.1, 2.2) angeordnet sind,
wobei das sperrbare Element (1, 2.1, 2.2) relativ zu dem Sperrkörper (4) beweglich ist,
wobei der Sperrkörper (4), wenn er sich in der Sperrposition befindet, wahlweise in die erste Öffnung (2.1) oder in die zweite Öffnung (2.2) eingreift,
wobei der Sperrkörper (4), wenn er in die erste Öffnung (2.1) eingreift, sich in dem oder einem weiteren Sperrmodus befindet und den rotierbaren Einwickelvorrichtungsteil (49, 60.1, 60.2) in der oder einer weiteren Rotationsposition (Pos.f) sperrt und
wobei der Sperrkörper (4), wenn er in die zweite Öffnung (2.2) eingreift, sich in dem Entlade-Sperrmodus befindet und den rotierbaren Einwickelvorrichtungsteil (49, 60.1, 60.2) in der Entlade-Rotationsposition (Pos.u) sperrt.

12. Einwickelvorrichtung nach Anspruch 11, **dadurch gekennzeichnet, dass** die Einwickelvorrichtung ein Übertragungselement (11) aufweist, das den Einwickelteilrotationsmotor (20, 51) mit dem rotierbaren Einwickelvorrichtungsteil (49, 60.1, 60.2) verbindet,
wobei der Einwickelteilrotationsmotor (20, 51) dazu angeordnet ist, das Übertragungselement (11) anzutreiben,
wobei das angetriebene Übertragungselement (11) dazu angeordnet ist, den rotierbaren Einwickelvorrichtungsteil (49, 60.1, 60.2) um die Einwickelteilrotationsachse (Y) zu rotieren, und wobei das sperrbare Element (1, 2.1, 2.2) sich in Antriebsverbindung mit einem Teil (21) des Übertragungselements (11) befindet.

13. Einwickelvorrichtung nach Anspruch 11 oder Anspruch 12, **dadurch gekennzeichnet, dass** sich mindestens eine Öffnung (2.1, 2.2) gesehen in die Richtung verjüngt, in der der Sperrkörper in die Sperrposition beweglich ist.

14. Einwickelvorrichtung nach einem der Ansprüche 11 bis 13, **dadurch gekennzeichnet, dass**
das sperrbare Element (1, 2.1, 2.2) relativ zu dem Sperrkörper (4) um eine Rotationsachse (X) des sperrbaren Elements rotieren kann,
wobei der Sperrkörper (4), wenn er in eine Öffnung (2.1, 2.2) eingreift, eine Rotation des sperrbaren Elements (1, 2.1, 2.2) relativ zu dem Rahmen (48) um die Rotationsachse (X) des sperrbaren Elements verhindert und
wobei der Sperrkörper (4), wenn er sich in der Löseposition befindet, eine Rotation des sperrbaren Elements (1, 2.1, 2.2) um die Rotationsachse (X) des sperrbaren Elements ermöglicht.

15. Einwickelvorrichtung nach einem der vorhergehenden Ansprüche, **dadurch gekennzeichnet, dass**
die Einwickelvorrichtung weiterhin einen Objektrotationsmotor aufweist,
wobei der Objektrotationsmotor dazu angeordnet ist, mindestens einen beweglichen Teil (54.1, 54.2) des Einwickeltischs (49) zu bewegen,
wodurch er bewirkt, dass das Objekt (B) auf dem Einwickeltisch (49) relativ zu dem Rahmen (48) um eine Objektrotationsachse (C) rotiert,
wobei die Objektrotationsachse (C) senkrecht oder winklig zu der Einwickelteilrotationsachse (X) ist.

16. Einwickelvorrichtung nach einem der vorhergehenden Ansprüche, **dadurch gekennzeichnet, dass**
der Einwickeltisch (49) als der oder ein rotierbarer Einwickelvorrichtungsteil dient,
wobei der Einwickelteilrotationsmotor (20) dazu angeordnet ist, den Einwickeltisch (49), der ein Objekt (B) trägt, relativ zu dem Rahmen (48) um die Einwickelteilrotationsachse (Y) zu rotieren.

17. Einwickelvorrichtung nach einem der vorhergehenden Ansprüche, **dadurch gekennzeichnet, dass**
der oder mindestens ein Vorratshalter (58.1, 58.2) als der oder ein rotierbarer Einwickelvorrichtungsteil dient,
wobei der Einwickelteilrotationsmotor (20) dazu angeordnet ist, den oder einen Vorratshalter (58.1, 58.2), der einen Vorrat (60.1, 60.2) aufnimmt, relativ zu dem Rahmen (48) um die Einwickelteilrotationsachse (Y) zu rotieren.

18. Verfahren zum Einwickeln mindestens eines Objekts (B) unter Verwendung einer Einwickelvorrichtung, mit:
- einem Rahmen (48),
- einem Einwickeltisch (49),
- einem Einwickelteilrotationsmotor (20, 51),
- mindestens einem Vorratshalter (60, 60.1, 60.2) zum Aufnehmen eines Vorrats (58, 58.1, 58.2) von Einwickelmaterial und
- einer Sperrvorrichtung (3, 4, 5), die wahlweise in einem Lösemodus oder in einem Entlade-Sperrmodus betrieben werden kann,
wobei der Einwickeltisch (49) als rotierbarer Einwickelvorrichtungsteil umgesetzt ist, der relativ zu dem Rahmen (48) um eine Einwickelteilrotationsachse (Y) rotierbar ist, und
wobei das Verfahren die folgenden Schritte umfasst:
- das oder ein einzuwickelndes Objekt (B) wird auf dem Einwickeltisch (49) platziert,
- der Einwickelteilrotationsmotor (20, 51) rotiert den rotierbaren Einwickelvorrichtungsteil (49, 60.1, 60.2) relativ zu dem Rahmen (48) um die Einwickelteilrotationsachse (Y), während die Sperrvorrichtung sich im Lösemodus befindet,
- die Rotation des rotierbaren Einwickelvorrichtungsteils (49, 60.1, 60.2) bewirkt, dass das auf dem Einwickeltisch (49) getragene Objekt (B) relativ zu mindestens einem von dem oder einem Vorratshalter (60, 60.1, 60.2) aufgenommenen Vorrat (58, 58.1, 58.2) bewegt wird,
- der Einwickelteilrotationsmotor (20, 51) den Schritt des Rotierens des rotierbaren Einwickelvorrichtungsteils (49, 60.1, 60.2) beendet, sodass das getragene Objekt (B) eingewickelt wird,
- die Sperrvorrichtung (3, 4, 5) in den Entlade-Sperrmodus überführt wird,
- der rotierbare Einwickelvorrichtungsteil (49, 60.1, 60.2) durch die Sperrvorrichtung (3, 4, 5) gesperrt wird, wenn sie sich im Entlade-Sperrmodus befindet, und
- das Objekt (B) von dem Einwickeltisch (49) entladen wird, während der rotierbare Einwickelvorrichtungsteil (49, 60.1, 60.2) durch die Sperrvorrichtung (3, 4, 5) gesperrt wird,
wobei der Schritt, dass die Sperrvorrichtung (3, 4, 5) in den Entlade-Sperrmodus überführt wird, den Schritt bewirkt, dass
die Sperrvorrichtung (3, 4, 5) eine Rotation des rotierbaren Einwickelvorrichtungsteils (49, 60.1, 60.2) um die Einwickelteilrotationsachse (Y) verhindert, sodass der rotierbare Einwickelvorrichtungsteil (49, 60.1, 60.2) in einer Entlade-Rotationsposition (Pos.u) relativ zu dem Rahmen (48) gesperrt wird, **dadurch gekennzeichnet, dass**
die Sperrvorrichtung (3, 4, 5) in mindestens einem von dem Entlade-Sperrmodus verschiedenen weiteren Sperrmodus betrieben werden kann,
wobei das Verfahren den weiteren Schritt aufweist, dass
die Sperrvorrichtung (3, 4, 5) in den oder einen weiteren Sperrmodus überführt wird, sodass der rotierbare Einwickelvorrichtungsteil (49, 60.1, 60.2) in einer weiteren Rotationsposition (Pos.f) relativ zu dem Rahmen (48) gesperrt wird, und
wobei sich die weitere Rotationsposition (Pos.f) von der Entlade-Rotationsposition (Pos.u) unterscheidet.

19. Einwickelverfahren nach Anspruch 18, **dadurch gekennzeichnet, dass**
die Sperrvorrichtung (3, 4, 5) in dem oder einem weiteren Sperrmodus betrieben wird, wenn das oder ein Objekt (B) auf dem Einwickeltisch (49) platziert wird,
sodass das Objekt (B) auf dem Einwickeltisch (49) platziert wird, während der rotierbare Einwickelvorrichtungsteil (49, 60.1, 60.2) relativ zu dem Rahmen (48) in der oder einer weiteren Rotationsposition (Pos.f) gesperrt wird, und
die Sperrvorrichtung (3, 4, 5) in den Lösemodus überführt wird, bevor der Einwickelteilrotationsmotor (20, 51) damit beginnt, den rotierbaren Einwickelvorrichtungsteil (49, 60.1, 60.2) zu rotieren.

20. Einwickelverfahren nach Anspruch 18 oder Anspruch 19, **dadurch gekennzeichnet, dass** das Verfahren die folgenden weiteren Schritte aufweist:
- ein weiteres einzuwickelndes Objekt wird auf dem Einwickeltisch (49) platziert,
- der rotierbare Einwickelvorrichtungsteil (49, 60.1, 60.2) wird relativ zu dem Rahmen (48) um die Einwickelteilrotationsachse (Y) rotiert, während der Einwickeltisch (49) das weitere Objekt trägt und die Sperrvorrichtung (3, 4, 5) sich im Lösemodus befindet,
- das weitere Objekt wird auf dem Einwickeltisch (49) eingewickelt,
- die Sperrvorrichtung (3, 4, 5) wird in den oder einen weiteren Sperrmodus überführt, sodass der rotierbare Einwickelvorrichtungsteil (49, 60.1, 60.2) relativ zu dem Rahmen (48) in der oder einer weiteren Rotationsposition (Pos.f) gesperrt wird, und
- das weitere Objekt vom Einwickeltisch (49) entladen wird, während der rotierbare Einwickelvorrichtungsteil (49, 60.1, 60.2) in der weiteren Rotationsposition (Pos.f) gesperrt wird.

21. Einwickelverfahren nach einem der Ansprüche 18 bis 20, **dadurch gekennzeichnet, dass** die Einwickelvorrichtung ein Übertragungselement (11) aufweist, das
- den Einwickelteilrotationsmotor (20, 51) mit
- dem rotierbaren Einwickelvorrichtungsteil (49, 60.1, 60.2)
verbindet,
wobei der Schritt, dass der Einwickelteilrotationsmotor (20, 51) den rotierbaren Einwickelvorrichtungsteil (49, 60.1, 60.2) rotiert, die Schritte aufweist, dass
- der Einwickelteilrotationsmotor (20, 51) das Übertragungselement (11) antreibt, während sich die Sperrvorrichtung (3, 4, 5) im Lösemodus befindet, und
- das angetriebene Übertragungselement (11) den rotierbaren Einwickelvorrichtungsteil (49, 60.1, 60.2) relativ zu dem Rahmen (48) um die Einwickelteilrotationsachse (Y) rotiert,
der Schritt, dass die Sperrvorrichtung (3, 4, 5) in den Entlade-Sperrmodus überführt wird und eine Rotation des rotierbaren Einwickelvorrichtungsteils (49, 60.1, 60.2) verhindert, den Schritt aufweist, dass
- die Sperrvorrichtung (3, 4, 5) eine Bewegung des Übertragungselements (11) verhindert,
- sodass der rotierbare Einwickelvorrichtungsteil (49, 60.1, 60.2) in der Entlade-Rotationsposition (Pos.u) gesperrt wird, und
der Schritt, dass die Sperrvorrichtung (3, 4, 5) in den weiteren Sperrmodus überführt wird und eine Rotation des rotierbaren Einwickelvorrichtungsteils (49, 60.1, 60.2) verhindert, den Schritt aufweist, dass
- die Sperrvorrichtung (3, 4, 5) eine Bewegung des Übertragungselements (11) verhindert,
- sodass der rotierbare Einwickelvorrichtungsteil (49, 60.1, 60.2) in der weiteren Rotationsposition (Pos.f) gesperrt wird.

22. Einwickelverfahren nach Anspruch 21, **dadurch gekennzeichnet, dass**
das Übertragungselement (11) einen rotierbaren Übertragungselementteil (1, 2.1, 2.2, 21) aufweist,
wobei der Schritt, dass der Einwickelteilrotationsmotor (20, 51) das Übertragungselement (11) antreibt, den Schritt aufweist, dass
der Einwickelteilrotationsmotor (20, 51) den rotierbaren Übertragungselementteil (1, 2.1, 2.2, 21) rotiert,
wobei der Schritt, dass das angetriebene Übertragungselement (11) den rotierbaren Einwickelvorrichtungsteil (49, 60.1, 60.2) rotiert, den Schritt aufweist, dass der rotierte Übertragungselementteil (1, 2.1, 2.2, 21) den rotierbaren Einwickelvorrichtungsteil (49, 60.1, 60.2) rotiert,
wobei der Schritt, dass der Umstand, dass sich die Sperrvorrichtung (3, 4, 5) im Entlade-Sperrmodus befindet,
eine Bewegung des Übertragungselements (11) verhindert, den Schritt aufweist, dass der Umstand, dass sich die Sperrvorrichtung (3, 4, 5) im Entlade-Sperrmodus befindet, den rotierbaren Übertragungselementteil (1, 2.1, 2.2, 21) in einer Entlade-Rotationsposition sperrt, die der Entnahme-Rotationsposition (Pos.u) des rotierbaren Einwickelvorrichtungsteils (49, 60.1, 60.2) entspricht, und
der Schritt, dass der Umstand, dass sich die Sperrvorrichtung (3, 4, 5) in dem oder einem weiteren Sperrmodus befindet, eine Bewegung des Übertragungselements (11) verhindert, den Schritt bewirkt, dass der Umstand, dass sich die Sperrvorrichtung (3, 4, 5) im dem oder einem weiteren Sperrmodus befindet, den rotierbaren Übertragungselementteil (1, 2.1, 2.2, 21) in einer weiteren Rotationsposition sperrt, die der weiteren Rotationsposition (Pos.f) des rotierbaren Einwickelvorrichtungsteils (49, 60.1, 60.2) entspricht.

23. Einwickelverfahren nach einem der Ansprüche 18 bis 22, **dadurch gekennzeichnet, dass** die Einwickelvorrichtung ein sperrbares Element (1, 2.1, 2.2) aufweist, das sich in Antriebsverbindung (21) mit dem rotierbaren Einwickelvorrichtungsteil (49, 60.1, 60.2) befindet und die Sperrvorrichtung (3, 4, 5) das Folgende aufweist:
- einen Sperrkörper (4), der in eine Sperrposition und in eine Löseposition beweglich ist, und
- einen Sperrkörperaktuator (3, 5) zum Bewegen des Sperrkörpers zwischen diesen beiden Positionen,
wobei eine erste Öffnung (2.1) und eine zweite Öffnung (2.2) in dem sperrbaren Element (1, 2.1, 2.2) angeordnet sind,
wobei der Schritt, dass die Sperrvorrichtung (3, 4, 5) in den Entlade-Sperrmodus überführt wird, die Schritte umfasst, dass
- das sperrbare Element (1, 2.1, 2.2) relativ zu dem Sperrkörper (4) in eine Position bewegt wird, in der die zweite Öffnung (2.2) dem sich in dem Lösemodus befindenden Sperrkörper (4) benachbart ist,
- der Sperrkörperaktuator (3, 5) den Sperrkörper (4) in die Sperrposition bewegt und
- der bewegte Sperrkörper (4) in die zweite Öffnung (2.2) eingreift und
der Schritt, dass die Sperrvorrichtung (3, 4, 5) in den oder einen weiteren Sperrmodus überführt wird, die Schritte aufweist, dass
- das sperrbare Element (1, 2.1, 2.2) relativ zu dem Sperrkörper bewegt wird in
- eine Position, in der die erste Öffnung (2.1) dem sich im Lösemodus befindenden Sperrkörper (4) benachbart ist,
- der Sperrkörperaktuator (3, 5) den Sperrkörper (4) in die Sperrposition bewegt und
- der bewegte Sperrkörper (4) in die erste Öffnung (2.1) eingreift.

## Revendications

1. Dispositif d'emballage destiné à emballer un objet (B),
dans lequel le dispositif d'emballage comprend
un bâti (48),
une table d'emballage (49),
un moteur d'entraînement de partie d'emballage (20, 51),
au moins un support de réservoir (60, 60.1, 60.2) destiné à supporter un réservoir (58, 58.1, 58.2) de matériau d'emballage, et
un dispositif de verrouillage (3, 4, 5) qui peut être commandé de manière sélective dans un mode de libération ou dans un mode de verrouillage de déchargement,
dans lequel la table d'emballage (49) est agencée de manière à supporter l'objet (B) à emballer,
dans lequel la table d'emballage (49) est mise en oeuvre sous la forme d'une partie de dispositif d'emballage pouvant tourner qui peut tourner par rapport au bâti (48) autour d'un axe de rotation de partie d'emballage (Y),
dans lequel le moteur d'entraînement de partie d'emballage (20, 51) est agencé de manière à faire tourner la partie de dispositif d'emballage pouvant tourner (49, 60.1, 60.2) autour de l'axe de rotation de partie d'emballage (Y),
provoquant ainsi un mouvement de l'objet (B) supporté par rapport au, ou au moins un, réservoir (58, 58.1, 58.2) maintenu par le ou un support de réservoir (60, 60.1, 60.2) et provoquant l'emballage de l'objet (B) supporté,
dans lequel le dispositif de verrouillage (3, 4, 5), lorsqu'il est dans le mode de libération, permet une rotation de la partie de dispositif d'emballage pouvant tourner (49, 60.1, 60.2) autour de l'axe de rotation de partie d'emballage (Y),
dans lequel le dispositif de verrouillage (3, 4, 5), lorsqu'il est dans le mode de verrouillage de déchargement, verrouille la partie de dispositif d'emballage pouvant tourner (49, 60.1, 60.2) dans une position angulaire de déchargement (Pos.u) par rapport au bâti (48) et
dans lequel le dispositif d'emballage est agencé de manière à décharger l'objet (B) ou à permettre le déchargement de l'objet (B) de la table d'emballage (49) lorsque la partie de dispositif d'emballage pouvant tourner (49, 60.1, 60.2) est verrouillée par le dispositif de verrouillage (3, 4, 5) lorsqu'il est dans le mode de verrouillage de déchargement,
**caractérisé en ce que**
le dispositif de verrouillage (3, 4, 5) peut être utilisé dans au moins un mode de verrouillage supplémentaire différant du mode de verrouillage de déchargement,
dans lequel le dispositif de verrouillage (3, 4, 5), lorsqu'il est dans le ou un mode de verrouillage supplémentaire, verrouille la partie de dispositif d'emballage pouvant tourner (49, 60.1, 60.2) dans une position angulaire supplémentaire (Pos.f) par rapport au bâti (48),
dans lequel la position angulaire supplémentaire (Pos.f) diffère de la position angulaire de déchargement (Pos.u).

2. Dispositif d'emballage selon la revendication 1,
**caractérisé en ce que**
un angle de 90 degrés est formé entre la position angulaire de déchargement (Pos.u) et la position angulaire supplémentaire (Pos.f) de la partie de dispositif d'emballage pouvant tourner (49, 60.1, 60.2).

3. Dispositif d'emballage selon la revendication 1,
**caractérisé en ce que**
un angle de 180 degrés est formé entre la position angulaire de déchargement (Pos.u) et la position angulaire supplémentaire (Pos.f) de la partie de dispositif d'emballage pouvant tourner (49, 60.1, 60.2).

4. Dispositif d'emballage selon l'une des revendications précédentes,
**caractérisé en ce que**
le dispositif d'emballage est agencé
de manière à transférer le dispositif de verrouillage (3, 4, 5) dans le ou un mode de verrouillage supplémentaire avant que l'objet (B) à emballer soit placé sur la table d'emballage (49), verrouillant ainsi la partie de dispositif d'emballage pouvant tourner (49, 60.1, 60.2) dans la ou une position angulaire supplémentaire (Pos.f) par rapport au bâti (48),
de manière à maintenir le dispositif de verrouillage (3, 4, 5) dans le mode de verrouillage supplémentaire pendant que l'objet (B) est placé sur la table d'emballage (49),
de manière à transférer le dispositif de verrouillage (3, 4, 5) dans le mode de libération avant que le moteur d'entraînement de partie d'emballage (20, 51) commence à faire tourner la partie de dispositif d'emballage pouvant tourner (49, 60.1, 60.2), et
de manière à transférer le dispositif de verrouillage (3, 4, 5) dans le mode de verrouillage de déchargement avant que l'objet (B) soit déchargé,
verrouillant ainsi la partie de dispositif d'emballage pouvant tourner (49, 60.1, 60.2) dans la position angulaire de déchargement (Pos.u) par rapport au bâti (48).

5. Dispositif d'emballage selon l'une des revendications précédentes,
**caractérisé en ce que**
le dispositif d'emballage est agencé de manière à décharger l'objet (B), ou à permettre le déchargement de l'objet (B) de la table d'emballage (49),
aussi lorsque la partie de dispositif d'emballage pouvant tourner (49, 60.1, 60.2) est verrouillée dans la ou une position angulaire supplémentaire (Pos.f).

6. Dispositif d'emballage selon l'une des revendications précédentes,
**caractérisé en ce que**
le dispositif d'emballage comprend un élément de transmission (11) couplant
le moteur d'entraînement de partie d'emballage (20, 51) avec
la partie de dispositif d'emballage pouvant tourner (49, 60.1, 60.2),
dans lequel le moteur d'entraînement de partie d'emballage (20, 51) est agencé de manière à entraîner l'élément de transmission (11),
dans lequel l'élément de transmission entraîné (11) est agencé de manière à faire tourner la partie de dispositif d'emballage pouvant tourner (49, 60.1, 60.2) autour de l'axe de rotation de partie d'emballage (Y),
dans lequel le dispositif de verrouillage (3, 4, 5) lorsqu'il est dans le mode de verrouillage de déchargement
verrouille l'élément de transmission (11) dans un mode de déchargement et
empêche un mouvement de l'élément de transmission (11), verrouillant ainsi la partie de dispositif d'emballage pouvant tourner (49, 60.1, 60.2) dans la position angulaire de déchargement (Pos.u), et
dans lequel le dispositif de verrouillage lorsqu'il est dans le ou au moins un mode de verrouillage supplémentaire
verrouille l'élément de transmission (11) dans un autre mode correspondant et
empêche un mouvement de l'élément de transmission (11), verrouillant ainsi la partie de dispositif d'emballage pouvant tourner (49, 60.1, 60.2) dans la ou une position angulaire supplémentaire (Pos.f).

7. Dispositif d'emballage selon la revendication 6,
**caractérisé en ce que**
le dispositif de verrouillage (3, 4, 5) lorsqu'il est dans le mode de verrouillage de déchargement verrouille l'élément de transmission (11) dans une position de verrouillage de déchargement par rapport au bâti (48) et
le dispositif de verrouillage (3, 4, 5) lorsqu'il est dans le ou un mode de verrouillage supplémentaire verrouille l'élément de transmission (11) dans une position de verrouillage supplémentaire,
dans lequel le verrouillage de l'élément de transmission (11) dans la position de verrouillage de déchargement verrouille la partie de dispositif d'emballage pouvant tourner (49, 60.1, 60.2) dans la position angulaire de déchargement (Pos.u) et
dans lequel le verrouillage de l'élément de transmission (11) dans la position de verrouillage supplémentaire verrouille la partie de dispositif d'emballage pouvant tourner (49, 60.1, 60.2) dans la position angulaire supplémentaire (Pos.f).

8. Dispositif d'emballage selon la revendication 6 ou 7,
**caractérisé en ce que**
l'élément de transmission (11) comprend une partie d'élément de transmission pouvant tourner (1, 2.1, 2.2, 21) qui est en liaison d'entraînement avec la partie de dispositif d'emballage pouvant tourner (49, 60.1, 60.2),
dans lequel le moteur d'entraînement de partie d'emballage (20, 51) est agencé de manière à faire tourner la partie d'élément de transmission pouvant tourner (1, 2.1, 2.2, 21),
dans lequel le dispositif de verrouillage (3, 4, 5) lorsqu'il est dans le mode de verrouillage de déchargement verrouille la partie d'élément de transmission (1, 2.1, 2.2, 21) par rapport au bâti (48) dans une position angulaire de déchargement,
dans lequel le dispositif de verrouillage (3, 4, 5) lorsqu'il est dans le ou chaque mode de verrouillage supplémentaire verrouille la partie d'élément de transmission (1, 2.1, 2.2, 21) dans une position angulaire supplémentaire,
dans lequel la partie d'élément de transmission (1, 2.1, 2.2, 21), lorsqu'elle est verrouillée dans la position angulaire de déchargement verrouille la partie de dispositif d'emballage pouvant tourner (49, 60.1, 60.2) dans la position angulaire de déchargement (Pos.u) et
dans lequel la partie d'élément de transmission (1, 2.1, 2.2, 21), lorsqu'elle est verrouillée dans la position angulaire supplémentaire verrouille la partie de dispositif d'emballage pouvant tourner (49, 60.1, 60.2) dans la position angulaire supplémentaire (Pos.f).

9. Dispositif d'emballage selon la revendication 8,
**caractérisé en ce que**
un angle de 90 degrés est formé entre la position angulaire de déchargement et la position angulaire supplémentaire de la partie d'élément de transmission (1, 2.1, 2.2, 21).

10. Dispositif d'emballage selon la revendication 8 ou 9,
**caractérisé en ce que**
le dispositif de verrouillage (3, 4, 5) comprend
un corps de verrouillage (4) pouvant être déplacé dans une position de verrouillage et dans une position de libération et
un actionneur de corps de verrouillage (3, 5) destiné à déplacer le corps de verrouillage (4) entre ces deux positions,
dans lequel la partie d'élément de transmission pouvant tourner (1, 2.1, 2.2, 21) peut être tournée par rapport au corps de verrouillage (4) au moins
dans la position angulaire de déchargement et
dans la ou au moins une position angulaire supplémentaire,
dans lequel le corps de verrouillage (4) lorsqu'il est dans la position de verrouillage empêche une rotation de la partie d'élément de transmission (1, 2.1, 2.2, 21) et
dans lequel la partie d'élément de transmission pouvant tourner (1, 2.1, 2.2, 21) peut être verrouillée de manière sélective
dans la position angulaire de déchargement ou
dans la ou chaque position angulaire de déchargement supplémentaire par le corps de verrouillage (4) lorsqu'il est dans la position de verrouillage.

11. Dispositif d'emballage selon l'une des revendications précédentes,
**caractérisé en ce que**
le dispositif d'emballage comprend un élément pouvant être verrouillé (1, 2.1, 2.2) qui est en liaison d'entraînement (21) avec la partie de dispositif d'emballage pouvant tourner (49, 60.1, 60.2) et
le dispositif de verrouillage (3, 4, 5) comprend
un corps de verrouillage (4) pouvant être déplacé dans une position de verrouillage et dans une position de libération et
un actionneur de corps de verrouillage (3, 5) destiné à déplacer le corps de verrouillage (4) entre ces deux positions,
dans lequel une première ouverture (2.1) et une seconde ouverture (2.2) sont positionnées dans l'élément pouvant être verrouillé (1, 2.1, 2.2),
dans lequel l'élément pouvant être verrouillé (1, 2.1, 2.2) peut être déplacé par rapport au corps de verrouillage (4),
dans lequel le corps de verrouillage (4) lorsqu'il est dans la position de verrouillage s'assemble de manière sélective dans la première ouverture (2.1) ou dans la seconde ouverture (2.2),
dans lequel le corps de verrouillage (4) lorsqu'il s'assemble dans la première ouverture (2.1) est dans le ou un mode de verrouillage supplémentaire et verrouille la partie de dispositif d'emballage pouvant tourner (49, 60.1, 60.2) dans la ou une position angulaire supplémentaire (Pos.f), et
dans lequel le corps de verrouillage (4) lorsqu'il s'assemble dans la seconde ouverture (2.2) est dans le mode de verrouillage de déchargement et verrouille la partie de dispositif d'emballage pouvant tourner (49, 60.1, 60.2) dans la position angulaire de déchargement (Pos.u).

12. Dispositif d'emballage selon la revendication 11,
**caractérisé en ce que**
le dispositif d'emballage comprend un élément de transmission (11) reliant le moteur d'entraînement de partie d'emballage (20, 51) avec la partie de dispositif d'emballage pouvant tourner (49, 60.1, 60.2),
dans lequel le moteur d'entraînement de partie d'emballage (20, 51) est agencé de manière à entraîner l'élément de transmission (11),
dans lequel l'élément de transmission entraîné (11) est agencé de manière à faire tourner la partie de dispositif d'emballage pouvant tourner (49, 60.1, 60.2) autour de l'axe de rotation de partie d'emballage (Y), et
dans lequel l'élément pouvant être verrouillé (1, 2.1, 2.2) est en liaison d'entraînement avec une partie (21) de l'élément de transmission (11).

13. Dispositif d'emballage selon la revendication 11 ou 12,
**caractérisé en ce que**
au moins une ouverture (2.1, 2.2) est évasée vue suivant la direction dans laquelle le corps de verrouillage (4) peut être déplacé vers la position de verrouillage.

14. Dispositif d'emballage selon l'une des revendications 11 à 13,
**caractérisé en ce que**
l'élément pouvant être verrouillé (1, 2.1, 2.2) peut tourner par rapport au corps de verrouillage (4) autour d'un axe de rotation d'élément pouvant être verrouillé (X),
dans lequel le corps de verrouillage (4) lorsqu'il s'assemble dans une ouverture (2.1, 2.2) empêche une rotation de l'élément pouvant être verrouillé (1, 2.1, 2.2) par rapport au bâti (48) autour de l'axe de rotation d'élément pouvant être verrouillé (X) et
dans lequel le corps de verrouillage (4) lorsqu'il est dans la position de libération permet une rotation de l'élément pouvant être verrouillé (1, 2.1, 2.2) autour de l'axe de rotation d'élément pouvant être verrouillé (X).

15. Dispositif d'emballage selon l'une des revendications précédentes,
**caractérisé en ce que**
le dispositif d'emballage comprend, en outre, un moteur d'entraînement d'objet,
dans lequel le moteur d'entraînement d'objet est agencé de manière à déplacer au moins une partie mobile (54.1, 54.2) de la table d'emballage (49),
provoquant ainsi la rotation de l'objet (B) sur la table d'emballage (49) par rapport au bâti (48) autour d'un axe de rotation d'objet (C),
dans lequel l'axe de rotation d'objet (C) est perpendiculaire à l'axe de rotation de partie d'emballage (Y) ou forme un angle par rapport à celui-ci.

16. Dispositif d'emballage selon l'une des revendications précédentes,
**caractérisé en ce que**
la table d'emballage (49) sert en tant que partie ou une partie de dispositif d'emballage pouvant tourner,
dans lequel le moteur d'entraînement de partie d'emballage (20) est agencé de manière à faire tourner la table d'emballage (49) supportant un objet (B) par rapport au bâti (48) autour de l'axe de rotation de partie d'emballage (Y).

17. Dispositif d'emballage selon l'une des revendications précédentes,
**caractérisé en ce que**
le ou au moins un support de réservoir (58.1, 58.2) sert en tant que partie ou une partie de dispositif d'emballage pouvant tourner,
dans lequel le moteur d'entraînement de partie d'emballage (20) est agencé de manière à faire tourner le ou un support de réservoir (58.1, 58.2) supportant un réservoir (60.1, 60.2) par rapport au bâti (48) autour de l'axe de rotation de partie d'emballage (Y).

18. Procédé d'emballage d'au moins un objet (B)
en utilisant un dispositif d'emballage comprenant
un bâti (48),
une table d'emballage (49),
un moteur d'entraînement de partie d'emballage (20, 51),
au moins un support de réservoir (60, 60.1, 60.2) afin de maintenir un réservoir (58, 58.1, 58.2) de matériau d'emballage, et
un dispositif de verrouillage (3, 4, 5) pouvant être commandé de manière sélective dans un mode de libération ou dans un mode de verrouillage de déchargement,
dans lequel la table d'emballage (49) est mise en oeuvre sous la forme d'une partie de dispositif d'emballage pouvant tourner qui peut tourner par rapport au bâti (48) autour d'un axe de rotation de partie d'emballage (Y) et
dans lequel le procédé comprend les étapes dans lesquelles
le ou un objet (B) à emballer est placé sur la table d'emballage (49),
le moteur d'entraînement de partie d'emballage (20, 51) fait tourner la partie de dispositif d'emballage pouvant tourner (49, 60.1, 60.2) par rapport au bâti (48) autour de l'axe de rotation de partie d'emballage (Y) pendant que le dispositif de verrouillage (3, 4, 5) est dans le mode de libération,
la rotation de la partie de dispositif d'emballage pouvant tourner (49, 60.1, 60.2) provoque le déplacement de l'objet (B) supporté sur la table d'emballage (49) par rapport à au moins un réservoir (58, 58.1, 58.2) maintenu par le ou un support de réservoir (60, 60.1, 60.2),
le moteur d'entraînement de partie d'emballage (20, 51) termine l'étape d'entraînement de la partie de dispositif d'emballage pouvant tourner (49, 60.1, 60.2) de telle sorte que l'objet (B) supporté est emballé,
le dispositif de verrouillage (3, 4, 5) est transféré dans le mode de verrouillage de déchargement,
la partie de dispositif d'emballage pouvant tourner (49, 60.1, 60.2) est verrouillée par le dispositif de verrouillage (3, 4, 5) lorsqu'il est dans le mode de verrouillage de déchargement, et
l'objet (B) est déchargé de la table d'emballage (49) pendant que la partie de dispositif d'emballage pouvant tourner (49, 60.1, 60.2) est verrouillée par le dispositif de verrouillage (3, 4, 5),
dans lequel, l'étape dans laquelle le dispositif de verrouillage (3, 4, 5) est transféré dans le mode de verrouillage de déchargement conduit à l'étape dans laquelle
le dispositif de verrouillage (3, 4, 5) empêche une rotation de la partie de dispositif d'emballage pouvant tourner (49, 60.1, 60.2) autour de l'axe de rotation de partie d'emballage (Y) de telle sorte que la partie de dispositif d'emballage pouvant tourner (49, 60.1, 60.2) est verrouillée dans une position angulaire de déchargement (Pos.u) par rapport au bâti (48), **caractérisé en ce que**
le dispositif de verrouillage (3, 4, 5) peut être utilisé dans au moins un mode de verrouillage supplémentaire différant du mode de verrouillage de déchargement,
dans lequel le procédé comprend l'étape supplémentaire dans laquelle
le dispositif de verrouillage (3, 4, 5) est transféré dans le ou un mode de verrouillage supplémentaire de telle sorte que la partie de dispositif d'emballage pouvant tourner (49, 60.1, 60.2) est verrouillée dans une position angulaire supplémentaire (Pos.f) par rapport au bâti (48) et
dans lequel la position angulaire supplémentaire (Pos.f) diffère de la position angulaire de déchargement (Pos.u).

19. Procédé d'emballage selon la revendication 18,
**caractérisé en ce que**
le dispositif de verrouillage (3, 4, 5) est commandé dans le ou un mode de verrouillage supplémentaire lorsque le ou un objet (B) est placé sur la table d'emballage (49)
de telle sorte que l'objet (B) est placé sur la table d'emballage (49) pendant que la partie de dispositif d'emballage pouvant tourner (49, 60.1, 60.2) est verrouillée par rapport au bâti (48) dans la ou une position angulaire supplémentaire (Pos.f) et
le dispositif de verrouillage (3, 4, 5) est transféré dans le mode de libération avant que le moteur d'entraînement de partie d'emballage (20, 51) commence à faire tourner la partie de dispositif d'emballage pouvant tourner (49, 60.1, 60.2).

20. Procédé d'emballage selon la revendication 18 ou 19,
**caractérisé en ce que**
le procédé comprend les étapes supplémentaires dans lesquelles
un objet supplémentaire à emballer est placé sur la table d'emballage (49),
la partie de dispositif d'emballage pouvant tourner (49, 60.1, 60.2) est tournée par rapport au bâti (48) autour de l'axe de rotation de partie d'emballage (Y) pendant que la table d'emballage (49) supporte l'objet supplémentaire et le dispositif de verrouillage (3, 4, 5) est dans le mode de libération,
l'objet supplémentaire sur la table d'emballage (49) est emballé,
le dispositif de verrouillage (3, 4, 5) est transféré dans le ou un mode de verrouillage supplémentaire de telle sorte que la partie de dispositif d'emballage pouvant tourner (49, 60.1, 60.2) est verrouillée par rapport au bâti (48) dans la ou une position angulaire supplémentaire (Pos.f), et
l'objet supplémentaire est déchargé de la table d'emballage (49) pendant que la partie de dispositif d'emballage pouvant tourner (49, 60.1, 60.2) est verrouillée dans la position angulaire supplémentaire (Pos.f).

21. Procédé d'emballage selon l'une des revendications 18 à 20,
**caractérisé en ce que**
le dispositif d'emballage comprend un élément de transmission (11) couplant
le moteur d'entraînement de partie d'emballage (20, 51) à
la partie de dispositif d'emballage pouvant tourner (49, 60.1, 60.2),
dans lequel, l'étape dans laquelle le moteur d'entraînement de partie d'emballage (20, 51) fait tourner la partie de dispositif d'emballage pouvant tourner (49, 60.1, 60.2) comprend les étapes dans lesquelles
le moteur d'entraînement de partie d'emballage (20, 51) entraîne l'élément de transmission (11) pendant que le dispositif de verrouillage (3, 4, 5) est dans le mode de libération et
l'élément de transmission entraîné (11) fait tourner la partie de dispositif d'emballage pouvant tourner (49, 60.1, 60.2) par rapport au bâti (48) autour de l'axe de rotation de partie d'emballage (Y),
l'étape dans laquelle le dispositif de verrouillage (3, 4, 5) est transféré dans le mode de verrouillage de déchargement et empêche une rotation de la partie de dispositif d'emballage pouvant tourner (49, 60.1, 60.2) comprend l'étape dans laquelle
le dispositif de verrouillage (3, 4, 5) empêche un mouvement de l'élément de transmission (11)
de telle sorte que la partie de dispositif d'emballage pouvant tourner (49, 60.1, 60.2) est verrouillée dans la position angulaire de déchargement (Pos.u), et
l'étape dans laquelle le dispositif de verrouillage (3, 4, 5) est transféré dans le mode de verrouillage supplémentaire et empêche une rotation de la partie de dispositif d'emballage pouvant tourner (49, 60.1, 60.2) comprend l'étape dans laquelle
le dispositif de verrouillage (3, 4, 5) empêche un mouvement de l'élément de transmission (11)
de telle sorte que la partie de dispositif d'emballage pouvant tourner (49, 60.1, 60.2) est verrouillée dans la position angulaire supplémentaire (Pos.f).

22. Procédé d'emballage selon la revendication 21,
**caractérisé en ce que**
l'élément de transmission (11) comprend une partie d'élément de transmission pouvant tourner (1, 2.1, 2.2, 21),
dans lequel l'étape dans laquelle le moteur d'entraînement de partie d'emballage (20, 51) entraîne l'élément de transmission (11) comprend l'étape dans laquelle
le moteur d'entraînement de partie d'emballage (20, 51) fait tourner la partie d'élément de transmission pouvant tourner (1, 2.1, 2.2, 21),
dans lequel l'étape dans laquelle l'élément de transmission entraîné (11) fait tourner la partie de dispositif d'emballage pouvant tourner (49, 60.1, 60.2) comprend l'étape dans laquelle
la partie d'élément de transmission pouvant tourner (1, 2.1, 2.2, 21) fait tourner la partie de dispositif d'emballage pouvant tourner (49, 60.1, 60.2),
dans lequel, l'étape dans laquelle le dispositif de verrouillage (3, 4, 5), lorsqu'il est dans le mode de verrouillage de déchargement,
empêche un mouvement de l'élément de transmission (11) comprend l'étape dans laquelle le dispositif de verrouillage (3, 4, 5), lorsqu'il est dans le mode de verrouillage de déchargement, verrouille la partie d'élément de transmission pouvant tourner (1, 2.1, 2.2, 21) dans une position angulaire de déchargement correspondant à la position angulaire de déchargement (Pos.u) de la partie de dispositif d'emballage pouvant tourner (49, 60.1, 60.2) et
l'étape dans laquelle le dispositif de verrouillage (3, 4, 5), lorsqu'il est dans le ou un mode de verrouillage supplémentaire, empêche un mouvement de l'élément de transmission (11) conduit à l'étape dans laquelle
le dispositif de verrouillage (3, 4, 5), lorsqu'il est dans le ou un mode de verrouillage supplémentaire, verrouille la partie d'élément de transmission pouvant tourner (1, 2.1, 2.2, 21) dans une position angulaire supplémentaire correspondant à la position angulaire supplémentaire (Pos.f) de la partie de dispositif d'emballage pouvant tourner (49, 60.1, 60.2).

23. Procédé d'emballage selon l'une des revendications 18 à 22,
**caractérisé en ce que**
le dispositif d'emballage comprend un élément pouvant être verrouillé (1, 2.1, 2.2) qui est en liaison d'entraînement (21) avec la partie de dispositif d'emballage pouvant tourner (49, 60.1, 60.2) et
le dispositif de verrouillage (3, 4, 5) comprend
un corps de verrouillage (4) pouvant être déplacé dans une position de verrouillage et dans une position de libération et
un actionneur de corps de verrouillage (3, 5) destiné à déplacer le corps de verrouillage (4) entre ces deux positions,
dans lequel une première ouverture (2.1) et une seconde ouverture (2.2) sont positionnées dans l'élément pouvant être verrouillé (1, 2.1, 2.2),
dans lequel l'étape dans laquelle le dispositif de verrouillage (3, 4, 5) est transféré dans le mode de verrouillage de déchargement comprend les étapes dans lesquelles
l'élément pouvant être verrouillé (1, 2.1, 2.2) est déplacé par rapport au corps de verrouillage (4) dans une position dans laquelle la seconde ouverture (2.2) est adjacente au corps de verrouillage (4), lorsqu'il est dans le mode de libération,
l'actionneur de corps de verrouillage (3, 5) déplace le corps de verrouillage (4) dans la position de verrouillage, et
le corps de verrouillage (4) déplacé s'assemble dans la seconde ouverture (2.2) et
l'étape dans laquelle le dispositif de verrouillage (3, 4, 5) est transféré dans le ou un mode de verrouillage supplémentaire comprend les étapes dans lesquelles
l'élément pouvant être verrouillé (1, 2.1, 2.2) est déplacé par rapport au corps de verrouillage (4) dans
une position dans laquelle la première ouverture (2.1) est adjacente au corps de verrouillage (4) lorsqu'il est dans le mode de libération,
l'actionneur de corps de verrouillage (3, 5) déplace le corps de verrouillage (4) dans la position de verrouillage, et
le corps de verrouillage (4) déplacé s'assemble dans la première ouverture (2.1).
